# EUROPÄISCHE PATENTSCHRIFT

(11) **EP 2 108 874 B1**
(45) Veröffentlichungstag und Bekanntmachung des Hinweises auf die Patenterteilung: **18.12.2013**
(21) Anmeldenummer: 09405051.5
(22) Anmeldetag: 18.03.2009
(51) Int. Cl.: F16L 37/091, F16L 37/092

(54) **Anschlusstück**
Connector piece
Pièce de raccordement

(30) Priorität: 11.04.2008 EP 08405104
(43) Veröffentlichungstag der Anmeldung: 14.10.2009
(73) Patentinhaber: R. Nussbaum AG, 4601 Olten (CH)
(72) Erfinder: Bobst, Urs, 4703 Kestenholz (CH); Graf, Markus, 4441 Thürnen (CH); Näf, Andreas, 5000 Aarau (CH); Zeiter, Patrik, 4853 Riken (CH); Wullschleger, Thomas, 3360 Herzogenbuchsee (CH); Schindler, Peter, 9043 Trogen (CH); Gysin, Kurt, 4446 Buckten (CH)
(74) Vertreter: Rüfenacht, Philipp Michael

(56) Entgegenhaltungen:
- EP-A- 1 840 434
- WO-A-02/16817
- DE-A1- 19 945 721
- DE-U1-202006 005 082
- US-A- 5 791 698

## Beschreibung

### Technisches Gebiet

Die Erfindung betrifft ein Anschlussstück mit einem ersten rohrförmigen Teil, welches mit einem zweiten rohrförmigen Teil eines fluidführenden Leitungssystems zur Etagenverteilung von Trinkwasser fluiddicht verbindbar ist, wobei das Anschlussstück derart ausgebildet ist, dass das zweite rohrförmige Teil in verbundenem Zustand teilweise vom ersten rohrförmigen Teil umschlossen ist, wobei im ersten rohrförmigen Teil an einer in verbundenem Zustand das zweite rohrförmige Teil kontaktierenden Innenmantelfläche eine umlaufende Ausnehmung ausgespart ist, in welche ein Ringdichtungselement eingebracht ist, und wobei das Anschlussstück derart ausgebildet ist, dass das zweite rohrförmige Teil durch Einschieben in den ersten Teil in einer Einschubrichtung im Sinn einer Steckverbindung mit dem ersten rohrförmigen Teil verbindbar ist. Die Erfindung betrifft weiter ein Verbindungsstück (Fitting) sowie eine Aramatur mit einem derartigen Anschlussstück sowie eine Anordnung zur Etagenverteilung von Warm- und Kaltwasser.

### Stand der Technik

Fluidführende Leitungssysteme, insbesondere für Wasser oder wässrige Lösungen, sind zumeist aus mehreren Elementen (Rohren, Verbindungsstücken bzw. Fittings, Armaturen etc.) aufgebaut. Diese Elemente weisen üblicherweise Anschlussstücke mit rohrförmigen Teilen auf, wobei die rohrförmigen Teile mit entsprechenden rohrförmigen Teilen der Anschlussstücke benachbarter Elemente verbunden werden können. Damit die Verbindung dicht ist, d. h. damit ein Austreten der im Leitungssystem geführten Flüssigkeit bei den Verbindungsstellen verhindert wird, sind letztere mit Dichtungen versehen. Bei vielen Leitungssystemen, z. B. für die Wasserversorgung (inkl. Hausverteilung), ist eine lange Lebensdauer gefordert, d. h. die Verbindungen müssen über einen langen Zeitraum (z. B. 50 Jahre) dicht bleiben. Anschlussstücke, die auch für die Etagenverteilung von Warm- und Kaltwasser geeignet sein sollen, müssen Temperaturen bis mindestens 70°C und Drücke bis mindestens 10 bar langfristig, während der genannten Zeitdauer aushalten.

Zur mechanisch festen und fluiddichten Verbindung der rohrförmigen Teile sind verschiedene Verbindungstechniken bekannt. Bei einer Schraubverbindung sind die miteinander zusammenwirkenden Teile mit zueinander passenden Gewinden versehen, bei einer Pressverbindung erfolgt ein mechanisches Verpressen eines der Teile oder einer zusätzlichen Presshülse. Steckverbindungen ermöglichen ein einfaches Verbinden der rohrförmigen Teile, indem eines der Teile auf das andere auf- oder in dieses eingeschoben wird, wobei im Wesentlichen durch die Ein- bzw. Aufschiebebewegung die mechanisch feste und fluiddichte Verbindung hergestellt wird, ohne dass ein Verschrauben der beiden Teile aneinander oder eine mechanische Verpressung notwendig ist.

Steckverbinder bieten somit den Vorteil einer einfachen und schnellen Montage. Bisherige für die Etagenverteilung von Warm- und Kaltwasser geeignete Steckverbinder umfassen einen Stütznippel, auf welchen das Leitungsrohr aufgeschoben wird. Der Stütznippel stützt das Rohr und gewährleistet eine sichere Abdichtung.

Die DE 199 45 721 A1 (Friatec AG) zeigt beispielsweise eine Steckkupplung mit einem Grundkörper, einem Dichtring, einem Klemmring sowie einem mit dem Grundkörper verbindbaren Ringkörper. Das Ende eines mit der Steckkupplung zu verbindenden Rohres kann in einen axialen Ringspalt zwischen dem Grundkörper und dem Ringkörper eingeschoben werden. In diesem Ringspalt ist der Klemmring angeordnet, welcher an der Klemmfläche des Ringkörpers und an der Aussenfläche des eingeschobenen Rohrendes unter Vorspannung anliegt.

Die DE 102 12 735 A1 (Georg Fischer Haustechnik AG) betrifft eine Schnellkupplung für Rohrleitungen mit Fittings, welche einen Innenteil, eine Aussenhülse sowie eine Innenhülse mit einem Zahnring und einem Klemmring aufweist. Die Innenhülse ist aus mindestens zwei Teilen zusammengesetzt, damit der Innenteil in diese eingesetzt werden kann.

Allerdings hat der Stütznippel der bekannten für die Etagenverteilung von Trinkwasser geeigneten Steckverbinder zum einen eine Verengung des nutzbaren Leitungsquerschnitts zur Folge und führt somit zu einem Druckabfall in der Leitung, und zum anderen stellen Verbinder mit Stütznippel sehr hohe Anforderungen an die einzuhaltenden Fertigungstoleranzen der zu verbindenden Rohre.

Die WO 02/16817 A1 (E. Hawle & Co. Armaturenwerke) behandelt eine stütznippellose Verbindungseinrichtung für Schutzrohre für Kabel, Datenleitungen etc. Die Schutzrohre verhindern ein Eindringen von Staub, Schmutz oder Feuchtigkeit. Ein Mittelteil umschliesst die Rohrenden und bildet zusammen mit den Verbindungsmuffen eine Ausnehmung, welche eine umschliessende Lippendichtung enthält. Die Rohre werden nach dem Hineinstecken in das Mittelteil durch ein Rückhalteelement festgehalten. Die dargestellte Anordnung ist aber nicht für fluidführende Leitungssysteme geeignet und nicht auf die entsprechenden Beanspruchungen ausgerichtet; insbesondere ist zu erwarten, dass die Abdichtung zwischen der Verbindungseinrichtung und den Rohren verloren gehen würde, wenn seitliche Kräfte auf den nicht im Anschlussstück gehaltenen Teil des Rohres wirken.

Die DE 20 2006 005 082 U1 (Ludwig Frischhut GmbH & Co. KG) offenbart eine zugfeste, stütznippelfreie Steckverbindung für Rohrleitungen mit einem Gehäuse, welches ein Rohr umschließt, mit einem Dichteelement, das zwischen dem Gehäuse und dem Rohr angeordnet ist, mit einem Klemmkeil und mit einer Klammer, welcher eine zusätzliche Haltefunktion zukommt. Das eingesteckte Rohr wird vorwiegend durch eine Auflagefläche am Ende gehalten, welche sich zwischen dem Dichtungselement und einem Anschlag befindet. Vorne bei der Öffnung des Gehäuses sowie zwischen dem Dichteelement und dem Klemmkeil ist ebenfalls je eine Kante vorhanden, welche das Rohr kontaktiert.

Auch bei dieser Vorrichtung besteht die Gefahr, dass die Abdichtung zwischen der Verbindungseinrichtung und den Rohren verloren geht, wenn seitliche Kräfte auf den nicht im Anschlussstück gehaltenen Teil des Rohres wirken.

### Darstellung der Erfindung

Aufgabe der Erfindung ist es, ein dem eingangs genannten technischen Gebiet zugehörendes, für die Etagenverteilung von Trinkwasser geeignetes Anschlussstück zu schaffen, welches einen Druckabfall vermeidet.

Die Lösung der Aufgabe ist durch die Merkmale des Anspruchs 1 definiert. Gemäss der Erfindung ist das Anschlussstück derart stütznippellos ausgebildet, dass eine Innenmantelfläche des zweiten rohrförmigen Teils in verbundenem Zustand nicht vom Anschlussstück kontaktiert wird.

Das Anschlussstück weist zudem zwei umlaufende Führungsflächen für den zweiten rohrförmigen Teil auf, nämlich eine erste Führungsfläche im Bereich einer Innenmantelfläche des ersten rohrförmigen Teils und eine in Bezug auf eine Einstecköffnung des Anschlussstücks hinter der ersten Führungsfläche angeordnete zweite Führungsfläche im Bereich der Innenmantelfläche des ersten rohrförmigen Teils. Die umlaufende Ausnehmung für das Ringdichtungselement ist zwischen der ersten Führungsfläche und der zweiten Führungsfläche angeordnet. Eine erste axiale Ausdehnung der ersten Führungsfläche und eine zweite axiale Ausdehnung der zweiten Führungsfläche betragen jeweils mindestens ein Sechstel eines Innendurchmessers des ersten rohrförmigen Teils, bevorzugt mindestens ein Viertel des Innendurchmessers. Es ist zudem von Vorteil, wenn die Summe der axialen Ausdehnungen beider Führungsflächen zusammen mindestens zwei Drittel, bevorzugt mindestens drei Viertel des Innendurchmessers des rohrförmigen Teils erreicht.

Aufgrund der stütznippellosen Konstruktion bleibt an der Verbindungsstelle der gesamte nutzbare Leitungsquerschnitt erhalten. Das Anschlussstück lässt sich zudem einfach aufbauen. Die vergleichsweise langen Führungsflächen beidseits des Ringdichtungselements stellen sicher, dass der zweite rohrförmige Teil sicher und fluiddicht im Anschlussstück gehalten ist, auch wenn seitliche Kräfte auf den nicht im Anschlussstück gehaltenen Teil des Rohres wirken. Die erste Führungsfläche gewährleistet zudem, dass der Querschnitt des Rohrs im Bereich der Abdichtung auch dann kreisförmig ist, wenn das Rohr unmittelbar ausserhalb des Anschlussstücks abgebogen ist oder seitliche Kräfte erfährt. Die zweite, hintere Führungsfläche verhindert ein Verkanten des zweiten rohrförmigen Teils im Bereich der Dichtung und gewährleistet eine sichere Abdichtung auch bei abgeschrägten Rohrenden. Weiter ist durch die lange Führungsfläche hinter dem Ringdichtungselement sichergestellt, dass der Monteur beim Einschieben des Rohrs deutlich spürt, wenn dieses genügend weit in das Anschlussstück eingeschoben wurde; eine gewisse Toleranz ist zudem für den Fall gegeben, dass das Rohr nicht bis ganz ans Ende der Steckverbindung gestossen wird.

Das erfindungsgemässe Anschlussstück ist insbesondere zur Verwendung mit Vollkunststoffrohren geeignet. Bei solchen Rohren stellt die Abdichtung auf der Rohraussenseite kein Problem dar, insbesondere im Gegensatz zu Verbundrohren, bei welchen ein Mediumkontakt mit der Stirnseite zu Korrosion und Delamination führt. Das Anschlussstück kann insbesondere Teil eines Verbindungsstücks (Fittings) sein, welches eine Verbindung zwischen verschiedenen Elementen des Leitungssystems (also z. B. zwischen zwei Rohren oder zwischen einem Rohr und einer Armatur) schaffen kann. Das Anschlussstück kann auch Teil einer Armatur mit Absperr-, Regel- und/oder Ventilfunktion sein. Die Armatur kann aus Metall, z. B. aus Siliciumbronze, Messing, Rotguss oder Edelstahl, aber auch aus Kunststoff, z. B. aus Polypropylen (PP), Polyvinylchlorid (PVC) oder technischen Kunststoffen wie Polysulfon (PSU) Polyphenylsulfon (PPSU) oder Polyphtalamid (PPA) gefertigt sein. Metallische Oberflächen können veredelt bzw. beschichtet sein, z. B. verchromt oder mit einer durch ein PVD-Verfahren erzeugten Schicht versehen. Kunststoffe können faser- oder nanostrukturverstärkt, insbesondere glasfaserverstärkt, sein.

Bevorzugt wird ein Anschlussstück, das derart ausgebildet ist, dass das zweite rohrförmige Teil in verbundenem Zustand teilweise vom ersten rohrförmigen Teil umschlossen ist, bei dessen ersten rohrförmigen Teil an einer in verbundenem Zustand das zweite rohrförmige Teil kontaktierenden Innenmantelfläche eine umlaufende Ausnehmung ausgespart ist, in welche ein Ringdichtungselement eingebracht ist, wobei das Anschlussstück derart ausgebildet ist, dass das zweite rohrförmige Teil durch Einschieben in den ersten rohrförmigen Teil in einer Einschubrichtung im Sinn einer Steckverbindung mit dem ersten rohrförmigen Teil verbindbar ist, und welches derart stütznippellos ausgebildet ist, dass eine Innenmantelfläche des zweiten rohrförmigen Teils in verbundenem Zustand nicht vom Anschlussstück kontaktiert wird, in einer Anordnung zur Etagenverteilung von Warm- und Kaltwasser eingesetzt, welche auf einem fluidführenden Leitungssystem mit Rohren aus PEx (vernetztem Polyethylen) oder Polybuten (PB) basiert. Diese bilden den zweiten rohrförmigen Teil, der mit dem ersten rohrförmigen Teil des Anschlussstücks verbindbar sind. Im Rahmen der Erfindung sind PEx-Rohre aus PEx-a, PEx-b und PEx-c verwendbar. PEx-Rohre und PB-Rohre korrodieren und delaminieren auch bei aussenseitiger Abdichtung nicht. Sie weisen zudem eine Temperatur- und Altersbeständigkeit auf, die den Erfordernissen der Etagenverteilung von Trinkwasser genügen. Gleichzeitig gehören sie auch zu denjenigen Rohren, welche eine ausreichende Festigkeit für eine stabile und langlebige stütznippelfreie Verbindung mit einem erfindungsgemässen Anschlussstück aufweisen. Das erfindungsgemässe Anschlussstück ist insbesondere für die in der Etagenverteilung verwendeten Rohre mit einem Aussendurchmesser von 16 und 20 mm geeignet. Sein Anwendungsbereich ist aber nicht auf diese Durchmesser beschränkt.

Ein erfindungsgemässes Anschlussstück mit langen Führungsflächen lässt sich zudem auch mit Rohren aus Polypropylen (PP), Polyethylen (PE) und Polyvinylchlorid (PVC) einsetzen.

Mit Vorteil ist zwischen der ersten Führungsfläche und der umlaufenden Ausnehmung ein Klemm- und/oder Krallelement zum axialen Sichern des eingeschobenen zweiten rohrförmigen Teils angeordnet. Ein Klemmelement, ein Krallelement, ein kombiniertes Klemm- und Krallelement oder eine Kombination von einem Klemmelement und einem Krallelement gewährleisten eine zuverlässige axiale Sicherung und damit eine sichere Abdichtung. Das Element bzw. die Elemente wirken mit dem eingeschobenen zweiten rohrförmigen Teil zusammen und sichern dieses axial. Die Klemmfunktion ergibt sich durch eine verhältnismässig grossflächige radiale Presskraft auf das zweite rohrförmige Teil (also primär durch Kraftschluss), die Krallfunktion durch ein kleinräumiges Eindringen von Krallen des Krallelements in das zweite rohrförmige Teil (also primär durch Formschluss). Mit Vorteil sind die Krallen des Krallelements abgerundet. Es hat sich gezeigt, dass diese Ausgestaltung dazu führt, dass beim Zurückziehen des zweiten rohrförmigen Teils eine schnelle initiale Krallwirkung erreicht wird.

Es ist grundsätzlich auch denkbar, das Klemm- und/oder das Krallelement vor der ersten Führungsfläche oder hinter der umlaufenden Ausnehmung für das Ringdichtungselement anzuordnen. Alternativ wird eine axiale Sicherung ohne Klemm- und Krallring geschaffen, z. B. indem die relative axiale Position zwischen Anschlussstück und Rohr durch eine Verbindung des Anschlussstücks mit dem Rohr ausserhalb des ersten rohrförmigen Teils fixiert wird.

Vorzugsweise umfasst das Klemm- und/oder Krallelement einen Klemmring mit keilförmigem Querschnitt, der in einer sich in Bezug auf die Einstecköffnung nach hinten erweiternden Ausnehmung im ersten rohrförmigen Teil aufgenommen ist, sowie einen federnden Krallring, der hinter dem Klemmring angeordnet ist. Der Klemmring umfasst mindestens eine Klemmkante, welche mit einem gewissen Druck umlaufend auf die Aussenfläche des zweiten rohrförmigen Teils gedrückt wird, kann aber auch mehrere hintereinander angeordnete Klemmkanten (z. B. in der Form eines Sägezahnprofils) aufweisen.

Mit Vorteil weist der Klemmring am Aussenumfang mehrere axial verlaufende Stege auf. Es hat sich herausgestellt, dass dadurch die Reibung bezüglich der Aufnahme und somit die für das Einschieben des zweiten rohrförmigen Teils benötigte Einsteckkraft verringert werden können.

Bevorzugt weist der Klemmring an einer Aussenmantelfläche im Wesentlichen axial verlaufende Profilierungen zum Zusammenwirken mit der Ausnehmung auf. Bei diesen Profilierungen kann es sich um eine Mehrzahl von Stegen handeln, so dass der Klemmring eine zahnradartige Form erhält. Es hat sich gezeigt, dass mit Hilfe dieser Profilierungen die Reibung zwischen dem Klemmring und der Ausnehmung verringert werden kann, insbesondere beim Zurückziehen des zweiten rohrförmigen Teils. Die Tiefe der Profilierungen ist insbesondere so gewählt, dass die Aussenfläche des Klemmrings auch bei den im Einsatz auftretenden Anpressdrucken die Aufnahme nur mit den Profilierungen kontaktiert und nicht mit den dazwischenliegenden Bereichen.

Alternativ ist die Aussenfläche des Klemmrings im Wesentlichen glatt.

Mit Vorteil weist der Klemmring an einer den Krallring kontaktierenden Stirnseite eine geneigte Anschlagfläche auf, welche ein Umbiegen von Elementen des Krallrings beim Zurückziehen des eingeschobenen zweiten rohrförmigen Teils begrenzt. Wie oben erwähnt, dringt der Klemmring beim Zurückziehen des zweiten rohrförmigen Teils in dieses ein und schafft somit eine axiale Sicherung. Durch die Anschlagfläche am Klemmring wird sichergestellt, dass die Krallen des Krallrings nur bis zu einer vorgegebenen Tiefe in das zweite rohrförmige Teil eindringen können. Ein weiteres Eindringen wird durch das Anliegen der schräg liegenden Krallen an der geneigten Anschlagfläche verhindert. Die Anschlagfläche begrenzt somit auch die Eindringtiefe der Elemente des Krallrings. Dadurch werden Beschädigungen des zweiten rohrförmigen Teils, die im Extremfall bis zum Abreissen des Rohrs führen können, verhindert. Der Winkel zwischen der Aussenfläche des zweiten rohrförmigen Teils und der Anschlagfläche beträgt mit Vorteil zwischen 95 und 150°, bevorzugt zwischen 105 und 135°.

Der Klemmring ist in der sich erweiternden Ausnehmung verschiebbar. Dadurch wird gewährleistet, dass der Klemm-/Krallring sich unabhängig von Toleranzen des Rohrdurchmessers beim Zurückziehen des zweiten rohrförmigen Teils in der Ausnehmung verkeilt und somit das zweite rohrförmige Teil axial sichert. Eine optimale Sicherung und gleichzeitig ein einfaches Einschieben des zweiten rohrförmigen Teils ergeben sich, wenn die sich nach hinten erweiternde Ausnehmung einen Winkel von 1 - 30°, bevorzugt 3 - 20°, besonders bevorzugt 5 - 15°, zu einer Achse des ersten rohrförmigen Teils aufweist. Der Klemmring ist mit Vorteil aus Kunststoff gefertigt, z. B. aus glasfaserverstärktem Polyamid, PPSU oder einem anderen geeigneten Material.

Damit der Aussen- und Innendurchmesser variabel sind, ist der Klemmring geschlitzt oder umfasst mehrere Klemmsegmente, welche durch verformbare Verbindungsabschnitte miteinander verbunden sind. Der Klemmring ist mit Vorteil so ausgebildet, dass er eine Vorspannung aufweist und beim Einschieben des Rohrs aufgeweitet wird. Dies stellt eine zuverlässige Axialsicherung des Rohrs sicher.

Der Klemmring umfasst eine erste Auflagefläche zum Kontaktieren einer Mantelfläche der sich nach hinten erweiternden Ausnehmung sowie eine zweite Auflagefläche zum Kontaktieren einer Aussenseite des zweiten rohrförmigen Teils. Mit Vorteil weist nun die erste Auflagefläche des Klemmrings mindestens einen Abschnitt auf, in welchem der Winkel der ersten Auflagefläche zur zweiten Auflagefläche des Klemmrings unterschiedlich ist vom Winkel der sich nach hinten erweiternden Ausnehmung zur Achse des ersten rohrförmigen Teils. Die Differenz zwischen den Winkeln beträgt dabei bevorzugt 0.1 - 10°, besonders bevorzugt 0.1 - 5°, insbesondere 0.5 - 2°. Die erste Auflagefläche kann als Konus ausgebildet sein und über die gesamte Ausdehnung einen konstanten Winkel zur zweiten Auflagefläche aufweisen, sie kann auch mehrere Abschnitte mit verschiedenen Winkeln umfassen, z. B. einen ersten Abschnitt, in welchem der Winkel grösser ist als derjenige zwischen der sich nach hinten erweiternden Ausnehmung und der Achse des ersten rohrförmigen Teils sowie einen zweiten Abschnitt, in welchem der Winkel kleiner ist. Falls mehrere Abschnitte vorhanden sind, sind diese mit Vorteil so angeordnet, dass die Form der ersten Auflagefläche im Wesentlichen konvex ist. Schliesslich kann die Aussenfläche auch konvex gekrümmt sein oder sowohl ebene als auch gekrümmte Abschnitte aufweisen.

Der Winkelunterschied ermöglicht zum einen ein einfaches Einschieben des Rohrs mit geringer Widerstandskraft des Klemmrings. Dabei kann der erstgenannte Winkel geringer sein als der zweitgenannte Winkel, oder er ist grösser als der zweitgenannte Winkel. Je nach Ausbildung gelangt beim Zurückstossen des Rohrs das hintere bzw. das vordere Ende der zweiten Auflagefläche bzw. beim Vorhandensein einer Verzahnung bzw. Profilierung der hinterste Zahn oder das hinterste Profil bzw. der vorderste Zahn oder das vorderste Profil der zweiten Auflagefläche unmittelbar in Eingriff mit der Aussenfläche des zweiten rohrförmigen Teils, wodurch sehr schnell eine hohe Klemmkraft aufgebaut wird.

Falls mehrere Abschnitte mit unterschiedlichem Winkel vorhanden sind, ist es von Vorteil, wenn der Übergang zwischen einem ersten und einem zweiten Abschnitt radial ausserhalb eines Profils bzw. Zahns, insbesondere radial ausserhalb des mündungsnächsten Zahns, ausgebildet ist, so dass der jeweilige Zahn bzw. das jeweilige Profil unmittelbar eine grosse Klemmkraft lokal auf das zweite rohrförmige Teil ausübt.

Bei einer vorteilhaften Ausführungsform der Erfindung weist der Krallring einen äusseren kreisringförmigen radialen Abschnitt auf sowie einen nach innen anschliessenden geschlitzten inneren Abschnitt, wobei der innere Abschnitt zum äusseren Abschnitt einen Winkel von 0 - 70°, bevorzugt 1 - 60°, besonders bevorzugt 20 - 50°, einschliesst. Bei einem ausreichend grossen Winkel zwischen den beiden Abschnitten kann der Krallring an seinem entsprechenden knickartigen Übergang auf dem angrenzenden Abschnitt des Anschlussstücks geführt und somit in Bezug auf das einzuschiebende zweite rohrförmige Teil zentriert werden. Ist der Winkel in Bezug auf die mit der Aussenseite des zweiten rohrförmigen Teils zusammenwirkenden Bereiche des inneren Abschnitts kleiner, können einzelne wenige (bevorzugt mindestens 3) zahnartige Teile des inneren Abschnitts mit einem grösseren Winkel ausgeführt werden und auf diese Weise die Führung auf dem angrenzenden Abschnitt des Anschlussstücks sicherstellen. Alternativ erfolgt die Führung im Bereich des äusseren Abschnitts, z. B. indem aussen anschliessend an den äusseren Abschnitt ein weiterer, zylindrischer Abschnitt vorgesehen wird, der auf einem axialen Abschnitt des Anschlussstücks geführt wird.

Die angegebenen Winkel gewährleisten zudem eine sichere Krallwirkung bereits bei geringem axialen Weg. Der Krallring ist bevorzugt derart ausgebildet und angeordnet, dass eine Eindringtiefe von 0.1-1.0 mm, besonders bevorzugt 0.2-0.5 mm, erreicht wird. Der Krallring ist bevorzugt aus Federstahl hergestellt, kann aber auch aus einem anderen Material (z. B. Kupfer) gebildet sein. Die Materialstärke beträgt mit Vorteil 0.1-1.0 mm, bevorzugt 0.2 - 0.6mm, besonders bevorzugt 0.25 - 0.4 mm. Die Ausbildung des Krallrings aus Metall stellt sicher, dass dieser seine Elastitzität dauerhaft beibehält und auch am Ende der langen geforderten Lebensdauer noch eine axiale Sicherung gewährleistet.

Alternativ kann der Klemmring auch auf andere Weise ausgebildet sein. Wie oben erwähnt, sind zudem Ausführungsformen möglich, die nur ein Klemmelement oder nur ein Krallelelement aufweisen oder die auf Klemm- und Krallelelemente ganz verzichten.

In einer bevorzugten Ausführungsform ist im Bereich der ersten Führungsfläche und/oder einer weiteren, dem Ringdichtungselement vorgeordneten Führungsfläche für den zweiten rohrförmigen Teil ein wulstartiger Vorsprung ausgebildet zur Bearbeitung einer Aussenfläche des zweiten rohrförmigen Teils beim Einschieben desselben.

Beim wulstartigen Vorsprung kann es sich um einen integrierten Entgrater mit spitz zulaufendem Profil oder auch um ein integriertes Rollierwerkzeug mit abgerundetem Querschnitt handeln. Der Vorsprung ist ringförmig umlaufend ausgebildet. Die maximale Höhe des Vorsprungs beträgt mit Vorteil maximal 0.30 mm und liegt bevorzugt zwischen 0.01 und 0.10 mm. Der Vorsprung kann aus dem Material der Kappe bzw. des Grundkörpers ausgebildet sein, aber auch als eingegossener oder eingespritzter Insert (z. B. aus Metall). Damit eine Bearbeitung der Aussenfläche des zweiten rohrförmigen Teils ermöglicht wird, wird der Wulst aus einem Material gebildet, welches härter ist als das Material der Aussenfläche des zweiten rohrförmigen Teils. Es können an einer oder mehreren Führungsflächen auch mehrere Wülste ausgebildet sein, z. B. ein Entgratwerkzeug am Eingang des Anschlussstücks und ein Rollierwerkzeug am entgegengesetzten Ende der ersten Führungsfläche. Die erwähnte weitere Führungsfläche ist insbesondere zwischen der ersten und der zweiten Führungsfläche angeordnet, z. B. zwischen einer Aufnahme für einen Klemm- und oder Krallring und der Aufnahme für das Ringdichtungselement.

Mit Hilfe des Entgrat- oder Rollierwerkzeugs werden Rohrbeschädigungen wie Kratzer oder Riefen ausgeglichen, wodurch eine sichere Abdichtung zwischen der Aussenfläche des zweiten rohrförmigen Teils und des Ringdichtungselements auch bei zunächst beschädigter Aussenfläche gewährleistet wird.

Bevorzugt ist das Ringdichtungselement eine Formdichtung in der Form einer Lippendichtung. Unter den Begriff Lippendichtung werden hier auch Dichtungen subsumiert, die teilweise als "Kompaktdichtung" bezeichnet werden und welche nicht nur lippenartige Teile aufweisen, sondern auch einen kompakten Grundkörper, an welchem die Lippen in der Art von Fortsätzen ausgebildet sind. Ein solches Element ermöglicht eine sichere Abdichtung, die vom Mediumdruck des im zweiten rohrförmigen Teil und im Anschlussstück geführten Fluids noch unterstützt wird. Durch den Einsatz von geeignet geformten Formdichtungen lassen sich zudem die benötigte Einsteckkraft für das zweite rohrförmige Teil auf praktikable Werte von unter 100 N, bevorzugt unter 40 N, verringern und grössere Toleranzen des Rohraussendurchmessers auffangen.

In dieser Hinsicht ist es von Vorteil, wenn die Ausnehmung für das Ringdichtungselement sich in Bezug auf die Einstecköffnung nach hinten erweitert und wenn die Lippendichtung einen im Wesentlichen V-förmigen Querschnitt hat und mit ihrer offenen Stirnseite in Einschubrichtung in der Ausnehmung aufgenommen ist. Die offene Stirnseite zwischen den beiden Schenkeln der V-Form ist also dem geführten Medium zugewandt, die zusammenlaufende Seite der Eingangsöffnung des Anschlussstücks. Das Medium drückt aufgrund seines Drucks die beiden Schenkel auseinander und unterstützt somit eine sichere Abdichtung. Die Keilform der Lippendichtung ermöglicht ein einfaches Einschieben des zweiten rohrförmigen Teils und ist der sich erweiternden Ausnehmung für das Ringdichtungselement angepasst.

Der äussere Schenkel, welcher mit der Mantelfläche der Ausnehmung zusammenwirkt weist mit Vorteil eine Profilierung auf, z. B. in der Form von mehreren umlaufenden Rillen. Es hat sich gezeigt, dass eine solche Profilierung die Abdichtsicherheit einer solchen Lippendichtung weiter verbessert.

Alternativ kann das Ringdichtungselement auch beispielsweise als O-Ring ausgeführt sein.

Die Ringdichtung ist mit Vorteil aus einem Kautschukmaterial (z. B. EPDM, HNBR) gefertigt und hat eine Härte von beispielsweise 30 - 95 Shore A, bevorzugt 60 - 80 Shore A. Es hat sich herausgestellt, dass mit einem Material in diesem Härtebereich eine bestmögliche Abdichtung bei grösstmöglichen Rohrtoleranzen erreichbar ist. Um die Gleitfähigkeit der Ringdichtung im Bedarfsfall zu steigern, kann sie teflonisiert, gefettet und/oder geölt werden. Dadurch lässt sich die Einsteckkraft reduzieren. Ein Fettauftrag an der Innenseite der Ringdichtung kann zudem eine verbesserte Abdichtung gegenüber Unebenheiten der Rohraussenseite schaffen, indem das aufgebrachte Fett in diese Unebenheiten (wie Längsriefen oder Kratzer) eindringt. Um ein Auswaschen des Fetts zu verhindert, wird dieses mit Vorteil in eine Ausnehmung an der Innenseite der Ringdichtung eingebracht, welche es axial und radial einschliesst. Geeignete Fette basieren beispielsweise auf der Kombination eines organischen Polymers und Dimethyl-Polysiloxan oder auf Silikonöl und gehören bevorzugt den NLGI-Klassen 1 - 3 an.

Die Ringdichtung kann auch aus einem wasserquellbaren Material gefertigt sein, so dass sie beim ersten Kontakt mit dem in der Leitung geführten Wasser aufquillt und die Dichtwirkung verstärkt.

Mit Vorteil umfasst das Ringdichtungselement ein erstes Ringdichtungsteil sowie ein zweites Ringdichtungsteil, wobei das erste Ringdichtungsteil aus einem Material hergestellt ist, welches eine grössere Härte aufweist als das Material, aus welchem das zweite Ringdichtungsteil hergestellt ist. Die Härte des ersten Ringdichtungsteils beträgt z. B. 30 - 95 Shore A, bevorzugt 60 - 80 Shore A wie oben angegeben, während das zweite Ringdichtungsteil eine geringere Härte im Bereich von 20 - 80 Shore A, bevorzugt 40 - 70 Shore A aufweist. Der härtere Teil des Ringdichtungselements gewährleistet die erforderliche mechanische Stabilität und verhindert eine Extrusion entlang des Spalts zwischen Anschlussstück und Rohraussenseite. Der weichere Teil passt sich der Oberfläche des Rohrs bestmöglich an und schafft so auch bei Rohrunebenheiten wie z. B. Längsriefen oder Kratzer eine sichere Abdichtung.

Die beiden Rohrdichtungsteile können mechanisch aneinander befestigt sein, z. B. durch gegenseitigen Formschluss, durch eine Verklebung oder durch Herstellung in einem Zweikomponenten-Spritzverfahren. Sie können aber auch separat ausgebildet und gegebenenfalls einzeln in das Anschlussstück eingebracht werden.

Das erste und das zweite Ringdichtungsteil sind bevorzugt derart ausgebildet, dass das erste Rohrdichtungsteil das zweite Rohrdichtungsteil axial beidseitig stützt. So wird eine Extrusion des weicheren Rohrdichtungsteils entlang der Rohraussenseite verhindert und die mechanische Stabilität des Ringdichtungselements gewährleistet. Das erste Rohrdichtungsteil kann beispielsweise im Wesentlichen U-förmig ausgebildet sein, so dass das zweite Rohrdichtungsteil zwischen den beiden Schenkeln des ersten Rohrdichtungsteils und der Rohraussenseite aufgenommen werden kann.

Die vorstehenden Merkmale bevorzugter Ausführungen des Ringdichtungselements, insbesondere auch der Fettauftrag auf der Dichtungsinnenseite und/oder der zweiteilige Aufbau des Elements lassen sich auch im Rahmen von Anschlussstücken vorteilhaft realisieren, die nicht vom erfindungsgemässen Typ sind. Insbesondere ist ihr Einsatz auch bei stütznippellosen Anschlusstücken von Vorteil, die nicht die erfindungsgemässen Führungsflächen aufweisen bzw. deren Führungsflächen nicht die angegebenen Ausdehnungen haben.

Bevorzugt umfasst das Anschlussstück ein Kappenteil, welches das zweite rohrförmige Teil in verbundenem Zustand teilweise umschliesst. Das Kappenteil kann verschiedene Aufgaben übernehmen: So kann es die Verbindungsstelle vor äusseren Einflüssen schützen, als Stütze bzw. Aufnahme für einen Klemm- und/oder Krallring dienen, eine Ringdichtung aufnehmen, eine Verdrehsicherung bilden usw.

Mit Vorteil ist das Kappenteil lösbar an einem Grundkörper des Anschlussstücks befestigt, um beispielsweise ein Lösen der Verbindung zu ermöglichen. Es ist nicht zwingend, dass das Lösen zerstörungsfrei erfolgen muss. Ein nachträglich anbringbares Kappenteil ermöglicht zudem ein einfacheres Zusammensetzen des Anschlussstücks. So kann eine sich erweiternde Ausnehmung für das Klemmelement beispielsweise am Übergang zwischen Kappenteil und Grundkörper angeordnet sein, wodurch das Klemmelement vor dem Zusammenbau von Kappenteil und Grundkörper einfach in diese Ausnehmung eingebracht werden kann.

Bevorzugt wird das Kappenteil am Grundkörper durch eine Schraubverbindung befestigt. Eine derartige Verbindung ist einfach herstell- und wieder lösbar und bietet eine hohe Sicherheit. Mit Vorteil umfasst die Schraubkappe aussenseitige Schlüsselflächen, so dass Werkzeuge zum Festziehen und Lösen der Kappe eingesetzt werden können. Bevorzugt haben die Schlüsselflächen eine Spezialkontur, so dass Spezialwerkzeuge verwendet werden müssen und unbefugte Manipulationen verhindert werden. Alternativ können die Schlüsselflächen aber auch übliche Konturen aufweisen, so dass übliche Werkzeuge wie z. B. Gabelschlüssel verwendbar sind.

Alternativ kann das Kappenteil beispielsweise mittels einer Clip-Verbindung oder einer Bajonett-Verbindung am Grundkörper befestigt werden.

Der Grundkörper kann aus Metall (z. B. Edelstahl, Rotguss, Siliciumbronze, Messing, Kupfer, Stahl etc.) oder Kunststoff (z. B. PSU, PPSU, PPA, PA etc.) gefertigt sein, wobei die Kunststoffmaterialien faser- oder nanostrukturverstärkt, insbesondere glasfaserverstärkt, sein können. Ein Grundkörper aus Metall ist sehr dauerhaft, gewährleistet eine hohe Stabilität und kann auch mehrfach verwendet werden. Besonders bevorzugt ist der Grundkörper aus strömungsoptimiertem Sandguss gefertigt. Der minimale Druckverlust des stütznippelfreien Anschlussstücks kann so, insbesondere bei Bögen oder T-Stücken, durch einen minimalen Druckverlust der restlichen Teile des Fittings oder der Armatur komplementiert werden. In die Aussenfläche eines metallischen Grundkörpers lässt sich zudem auf einfache Weise ein Gewinde zur Befestigung eines Kappenteils schneiden, ein metallischer Grundkörper ist gut für Pressverbindungen geeignet und kann Teil einer Armatur bilden. Für Grundkörper verwendbare Kunststoffe sind mit Vorteil UV-stabil sowie gegen Hydrolyse stabilisiert.

Das Kappenteil wird mit Vorteil aus Kunststoff, z. B. aus PPSU, PSU, PPA oder einem anderen geeigneten Kunststoffmaterial, z. B. glasfaserverstärktem Polyamid, hergestellt. Kunststoff als Kappenmaterial ermöglicht die Ausbildung eines Garantieelements und lässt sich leicht beschriften. Es ist auch eine einfache Clip-Verbindung mit dem Grundkörper möglich. Kunststoffkappen können zudem ganz oder teilweise transparent ausgeführt werden. So sind die Sicherungselemente, z. B. ein Krallring und/oder ein Klemmring von aussen sichtbar. Wenn auch der Grundkörper aus einem transparenten Material ausgeführt ist, kann auch die Einstecktiefe des zweiten rohrförmigen Teils von aussen unmittelbar wahrgenommen werden. Das Kappenteil wird insbesondere bei einem zerstörenden Lösevorgang jeweils ersetzt.

Bei einer geeigneten Ausbildung des Kappenteils kommt dieses nicht in Kontakt mit dem im Leitungssystem geführten Trinkwasser. Somit sind auch Kunststoffe wie Polyamid zur Herstellung des Kappenteils geeignet.

Die erste Führungsfläche ist bevorzugt im Bereich eines Innenmantels des Kappenteils ausgebildet, die zweite Führungsfläche entsprechend bevorzugt am Grundkörper.

Die umlaufende Ausnehmung für das Ringdichtungselement ist bevorzugt im Grundkörper ausgebildet, d. h. die Ausnehmung wird sowohl vorne und hinten als auch aussen vom Grundkörper begrenzt. Die Einkammerung gewährleistet eine sichere Führung des Ringdichtungselements und somit eine hohe Druckfestigkeit. Die separate Einkammerung des Ringdichtungselements trennt die Dichtfunktion von der Krall- und Klemmfunktion. Indem zwischen dem Ort des Dichtens und dem Ort des Krallens/Klemmens ein Abstand vorgesehen wird, kann die Abdichtsicherheit zusätzlich erhöht werden.

Alternativ ist die Ausnehmung für das Ringdichtungselement zwischen der Kappe und dem Grundkörper bzw. dem Grundkörper und einem weiteren Element bzw. zwischen der Kappe und einem weiteren Element ausgebildet.

Ein bevorzugter Aufbau des Anschlussstücks ist also folgender: Auf den Grundkörper ist ein Kappenteil aufgeschraubt, an dessen Innenmantel die erste Führungsfläche ausgebildet ist. Hinten an die erste Führungsfläche schliesst sich im Innenmantel des Kappenteils die sich erweiternde Ausnehmung für das Klemmelement an. Der folgende Abschnitt des ersten rohrförmigen Teils wird vom Grundkörper gebildet. In diesem Abschnitt sind zunächst die umlaufende Ausnehmung für das Ringdichtungselement und dahinter die zweite Führungsfläche ausgebildet. Das Ringdichtungselement ist vollständig im Grundkörper aufgenommen, das Klemmelement und das Krallelelement sind zwischen dem Kappenteil und dem Grundkörper gehalten. Das Klemmelement weist mit Vorteil eine Vorspannung auf, welche sicherstellt, dass sich im Ausgangszustand, d. h. vor dem Einschieben des zweiten rohrförmigen Teils, das Klemmelement, das Krallelelement und der anschliessende Abschnitt des Grundkörpers unmittelbar folgen. Das flexible Ringdichtungselement lässt sich einfach in die Ausnehmung im Grundkörper einbringen, während das Klemm- und das Krallelelement vor dem Zusammenbau von Kappenteil und Grundkörper an den vorgesehenen Stellen platziert werden.

Zwischen dem Kappenteil und dem Grundkörper ist mit Vorteil ein Garantieelement angeordnet, welches ein erfolgtes Lösen des Kappenteils vom Grundkörper dauerhaft anzeigt. Das Garantieelement umfasst insbesondere eine Sollbruchstelle, welche beim Lösen des Kappenteils beschädigt wird. Das entfernte (und zerstörte bzw. beschädigte) Kappenteil kann durch ein neues Kappenteil ersetzt werden, wenn eine neue Verbindung geschaffen werden soll.

In einer bevorzugten Ausführungsform ist das Garantieelement wie folgt ausgeführt: Auf einem Aussenmantel des Grundkörpers ist ein Aussengewinde ausgebildet und auf einem Innenmantel des Kappenteils ist ein Innengewinde ausgebildet, wobei der Kappenteil mit seinem Innengewinde auf das Aussengewinde des Grundkörpers aufschraubbar ist. Am Aussenmantel des Grundkörpers ist weiter ein hinterschnittener Bereich ausgebildet, in welchen ein laschenartiger Abschnitt des Kappenteils beim Aufschrauben einrasten kann. Der hinterschnittene Bereich und der laschenartige Abschnitt sind nun derart ausgebildet, dass bei einem Lösen des aufgeschraubten Kappenteils vom Grundkörper der laschenartige Abschnitt bricht.

Es sind auch andere Garantieelemente denkbar, z. B. in der Art eines Garantierings, welcher über als Sollbruchstellen ausgebildete Brücken mit einem Hauptteil des Kappenteils verbunden ist.

Das Anschlussstück verfügt mit Vorteil über eine Markierung, welche eine vorgegebene Einstecktiefe des zweiten rohrförmigen Teils anzeigt, z. B. eine Rille, eine Erhebung oder eine farbliche Kennzeichnung. Die Montageperson kann vor dem Einschieben anhand der Markierung die benötigte Einstecktiefe am zweiten rohrförmigen Teil markieren und nach dem Einschieben leicht feststellen, ob das zweite rohrförmige Teil ausreichend weit in das Anschlussstück eingesteckt wurde. Alternativ kann die Markierung am zweiten rohrförmigen Teil z. B. mit Hilfe einer Lehre oder eines entsprechend ausgebildeten Trennwerkzeugs vorgenommen werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A, B: Einen Querschnitt einer Ausführungsform eines erfindungsgemässen Anschlussstücks vor bzw. nach dem Einschieben eines Rohrendes;
- Fig. 2: ein Schrägbild eines aufgeschnittenen Abschnitts des Grundkörpers und der Schraubkappe zur Darstellung der Garantieverbindung;
- Fig. 3: einen Querschnitt einer Lippendichtung für das erfindungsgemässe Anschlussstück;
- Fig. 4: einen Querschnitt eines mehrteiligen Dichtungselements für das erfindungsgemässe Anschlussstück;
- Fig. 5: ein Schrägbild eines Klemmrings für ein erfindungsgemässes Anschlussstück;
- Fig. 6: einen Querschnitt durch den Klemmring;
- Fig. 7: ein Schrägbild eines Krallrings für ein erfindungsgemässes Anschlussstück; und
- Fig. 8A, B: Querschnitte durch verschiedene Ausführungsformen von Schraubkappen für ein erfindungsgemässes Anschlussstück.

Grundsätzlich sind in den Figuren gleiche Teile mit gleichen Bezugszeichen versehen.

### Wege zur Ausführung der Erfindung

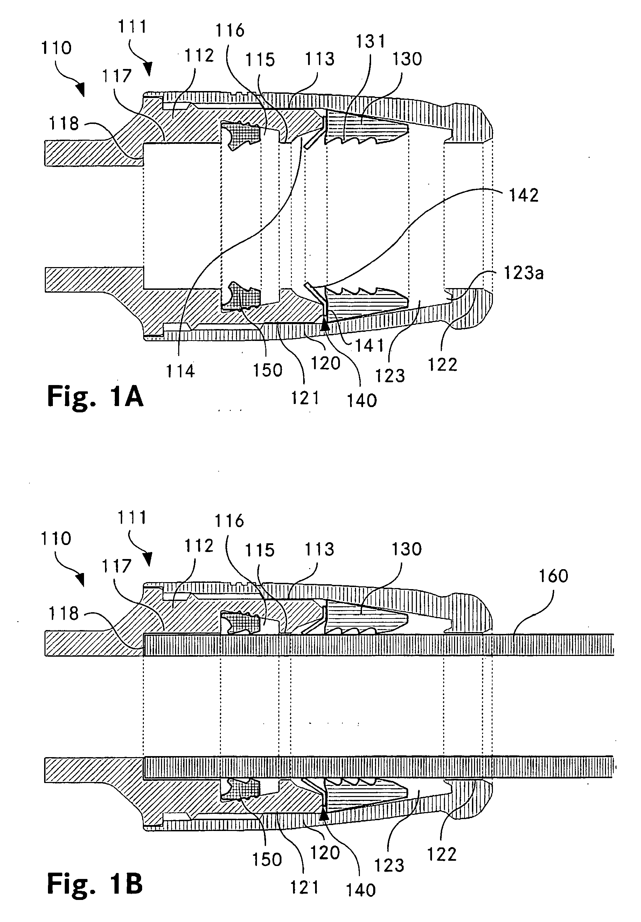

Die Figuren 1A, 1B zeigen einen Querschnitt einer Ausführungsform eines erfindungsgemässen Anschlussstücks vor bzw. nach dem Einschieben eines Rohrendes. Dargestellt ist ein Bauelement 110 (z. B. Fitting, Armatur etc.) mit einem Anschlussstück 111, welches zur Aufnahme eines Endes eines Rohrs 160 aus PEx (vernetztem Polyethylen) geeignet ist. Das Anschlussstück 111 umfasst einen Grundkörper 112, der mit dem Bauelement 110 einstückig aus Rotguss hergestellt ist, und eine diesen teilweise umschliessende hülsenartige Schraubkappe 120 aus glasfaserverstärktem und gegen UV-Strahlung stabilisiertem Polyamid (PA). Die Schraubkappe 120 ist über ein Innengewinde 121 auf ein entsprechendes Aussengewinde 113 des Grundkörpers 112 aufgeschraubt.

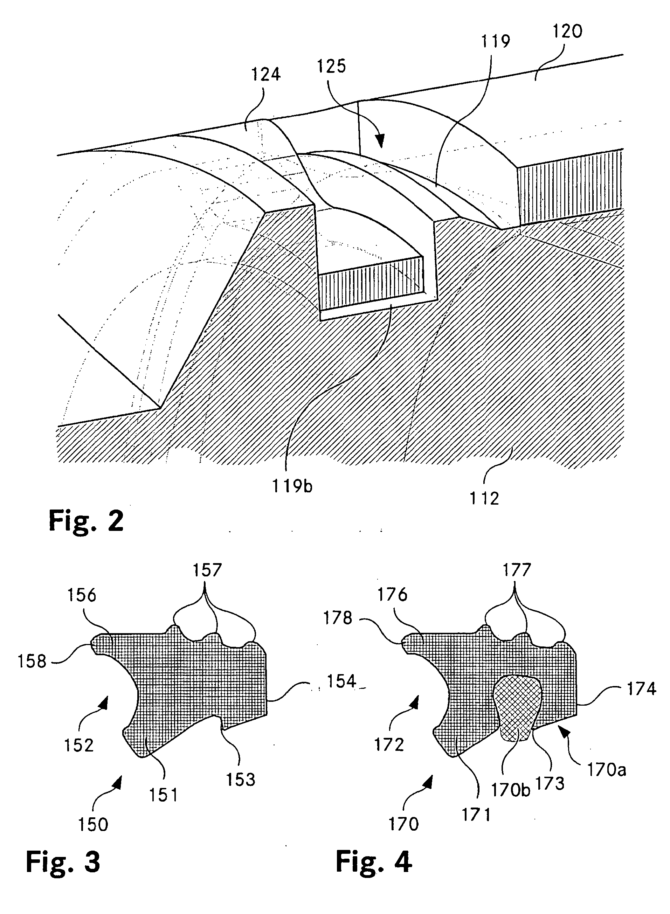

Zwischen der Schraubkappe 120 und dem Grundkörper 112 ist eine Garantieverbindung vorhanden, die sicherstellt, dass die Schraubkappe 120 beim Wiederentfernen vom Grundkörper 112 sichtbar beschädigt wird. Die Garantieverbindung ist weiter unten, im Zusammenhang mit der Figur 2 näher beschrieben.

Die Schraubkappe 120 ist an ihrem vorderen Teil, auf ihr freies Ende hin, zulaufend ausgebildet und hat in einem vorderen Abschnitt einen Innenquerschnitt, der dem Aussenquerschnitt des aufzunehmenden Rohrs 160 entspricht. Die Schraubkappe bildet in diesem Abschnitt somit eine zylindrische Führungsfläche 122 für das Rohr 160. Die Wandung der Schraubkappe 120 ist im Bereich der Mündung angefast, so dass das Rohr 160 beim Einschieben automatisch zentriert wird.

Die Schraubkappe 120 weist in ihrem vorderen Teil, nahe ihres freien Endes, weiter eine ringförmige Ausnehmung 123 mit ungefähr trapezförmigem Querschnitt auf, welche sich in Einschubrichtung erweitert. In dieser Ausnehmung 123 ist ein Klemmring 130 aus glasfaserverstärktem Polyamid (Glasfasergehalt 30%) gehalten. Dessen Aussenkontur entspricht im Wesentlichen dem Innenquerschnitt eines axialen Bereichs der Ausnehmung 123. Der Klemmring 130 weist einen durchgehenden axialen Schlitz auf, so dass er im Durchmesser eine gewisse Variabilität aufweist. Die Innenflächen der Klemmsegmente sind derart geformt, dass sie den Aussenmantel des Rohrs 160 grossflächig kontaktieren können, um zwischen der Schraubkappe 120 und dem Rohr 160 eine Klemmwirkung zu erzeugen. An ihrem vorderen, an die Führungsfläche 122 anschliessenden Bereich läuft die Ausnehmung 123 in einem hinterschnittenen Abschnitt 123a aus. Der Klemmring 130 ist entsprechend an seinem vorderen Ende zulaufend ausgebildet, so dass der vorderste Bereich des Klemmrings 130 im hinterschnittenen Abschnitt 123a aufgenommen werden kann. Dies gestattet eine Verlängerung des Verschiebewegs für den Klemmring 130 in Richtung auf die Mündung der Schraubkappe 120, ohne dass die Führungsfläche 122 verkürzt werden muss. Die Begrenzung des hinterschnittenen Abschnitts 123a bildet zudem einen Anschlag für den Klemmring 130, welcher eine weitergehende Verschiebung verhindert und auch bei einer allfälligen alterungsedingten Querschnittsreduktion des Klemmrings 130 weiterhin eine Klemmkraft sicherstellt.

Die Aussenmantelfläche des Klemmrings 130 definiert eine erste Auflagefläche zum Kontaktieren einer Mantelfläche der sich nach hinten erweiternden Ausnehmung 123. Die Innenmantelfläche des Klemmrings 130 zur Kontaktierung des Aussenmantels des Rohrs 160 weist eine Profilierung 131 mit vier in Ebenen senkrecht zur Rohrachse umlaufenden Klemmkanten auf. Die Grate der Klemmkanten definieren also eine zweite Auflagefläche zum Kontaktieren der Aussenseite des eingeschobenen Rohrs 160. Der Winkel zwischen der ersten Auflagefläche und der zweiten Auflagefläche beträgt 11°. Der Winkel zwischen der Mantelfläche der sich nach hinten erweiternden Ausnehmung 123 und der Achse des Rohrs 160 beträgt 9°, ist also etwas kleiner.

Hinten an den Klemmring 130 anschliessend ist ein Krallring 140 aus Federstahl mit einer Stärke von 0.35 mm angeordnet. Dieser weist einen äusseren ringförmigen Abschnitt 141 auf sowie einen an diesen Abschnitt 141 anschliessenden geschlitzten inneren Abschnitt 142. Der geschlitzte innere Abschnitt 142 weist eine Mehrzahl von beabstandeten Zähnen auf, die alle in einem Winkel von 45° vom äusseren Abschnitt 141 weggeknickt sind und somit schräg nach hinten (d. h. von der Mündung des Anschlussstücks 111 weg) weisen. Der Krallring 140 ist im Bereich des Knicks auf einem entsprechend ausgeformten Abschnitt des Grundkörpers 112 geführt und dadurch in Bezug auf das einzuschiebende Rohr 160 zentriert. Der Grundkörper 112 bildet hinter dem Krallring 140 eine umlaufende, sich nach hinten verengende Ausnehmung 114, in welcher der innere Abschnitt 142 des Krallrings 140 aufgenommen ist und welche Raum für eine weitere Verformung des inneren Abschnitts 142 des Krallrings 140 bietet. An diese Ausnehmung 114 schliesst sich eine weitere zylindrische Führungsfläche 115 an, deren Innendurchmesser dem Aussendurchmesser des aufzunehmenden Rohrs 160 entspricht.

Wiederum hinter der Führungsfläche 115 ist im Grundkörper 112 eine weitere umlaufende Ausnehmung 116 mit ungefähr trapezförmigem Querschnitt ausgebildet, welche sich in Einschubrichtung erweitert. In dieser Ausnehmung 116 ist eine Lippendichtung 150 aus elastischem Material mit ungefähr V-förmigem Querschnitt gehalten. Die Lippendichtung 150 ist weiter unten, im Zusammenhang mit der Figur 3 näher beschrieben.

An die Ausnehmung 116 für die Lippendichtung 140 schliesst sich im Grundkörper 112 ein weiterer zylindrischer Abschnitt mit einer Führungsfläche 117 an. Am hinteren Ende dieser Führungsfläche 117 ist im Grundkörper 112 ein als Stufe ausgebildeter Anschlag 118 für die Stirnseite des Rohrs 160 ausgebildet. Im Anschluss an diese Stufe entspricht der Innenquerschnitt des Grundkörpers 112 dem Innenquerschnitt des Rohrs 160. Es wird somit durch das eingeschobene Rohr 160 und den Grundkörper 112 ein Fluidkanal mit gleichbleibendem Querschnitt gebildet.

Der Steckverbinder wird zusammengesetzt, indem zunächst die Lippendichtung 140 in die entsprechende Ausnehmung 116 im Grundkörper 112 eingesetzt wird. Aufgrund der Elastizität der Lippendichtung 140 gelingt dies problemlos. Anschliessend werden der Klemmring 130 und der Krallring 140 von hinten in die Schraubkappe 120 eingebracht. Die Schraubkappe 120 mit Klemm- und Krallring 130, 140 kann nun mit ihrem Innengewinde 121 auf das Aussengewinde 113 des Grundkörpers 112 aufgeschraubt werden, wobei durch das Einschnappen eines laschenartigen Abschnitts (siehe unten) auch die Garantieverbindung zwischen Schraubkappe 120 und Grundkörper 112 geschaffen wird.

Zum Schaffen einer Steckverbindung wird das Rohr 160 in die Mündung des Steckverbinders eingeführt. Dieser Vorgang wird durch die im Bereich der Mündung der Schraubkappe 120 ausgebildete Anfasung unterstützt. Als Nächstes gelangt das Rohr 160 in Kontakt mit den Klemmkanten (Profilierung 131) des Klemmrings 130. Durch eine weitere Anfasung im Bereich des mündungsseitigen Endes des Klemmrings 130 erfolgt eine Zentrierung des Klemmrings 130 in Bezug auf das Rohr 160 und die Ausnehmung 123 im Kappenteil 120. Der in der Ausnehmung 123 aufgenommene Klemmring 130 wird bei Bedarf soweit mitgenommen (und gleichzeitig aufgeweitet), bis das Rohr 160 ihn passieren kann. Anschliessend kontaktiert das Rohr 160 die freien Enden der inneren Abschnitte 142 des Krallrings 140. Weil diese schräg in Einschubrichtung weisen, werden sie beim weiteren Einschieben elastisch verformt und behindern das Einschieben kaum. Ein Zurückziehen des von den Krallen erfassten Rohrs 160 ist aber nur noch mit ausserordentlichem Kraftaufwand möglich und führt in der Regel zu einer Beschädigung des Rohrs 160, indem dieses reisst oder aufgrund des Mediumdrucks platzt.

Beim weiteren Aufschieben des Rohrs 160 wird die Lippendichtung 140 leicht verformt und gegen die Mantelfläche der entsprechenden Ausnehmung 116 gedrückt. Das Einschieben des Rohrs 150 ist beendet, wenn die freie Stirnfläche des Rohrs 160 am Anschlag 117 des Grundkörpers 112 anliegt. In der entsprechenden Lage ist das Rohr 160 durch die Führungsfläche 122 am vorderen Ende der Schraubkappe 120, die Führungsfläche 115 im Bereich des vorderen Endes des Grundkörpers 112 und die Führungsfläche 118 im hintersten Bereich der Aufnahme für das Rohr 160 sicher gestützt.

Die Abdichtung des Rohrs 160 gegenüber dem Anschlussstück 111 erfolgt auf der Rohraussenseite, durch die Lippendichtung 150. Die axiale Sicherung des eingeschobenen Rohrs erfolgt durch den Krallring 140 und den Klemmring 130. Der Krallring 140 dringt beim Versuch des Zurückziehens in den Rohraussenmantel ein und schafft somit eine formschlüssige Verbindung. Die Rückzugsbewegung des Rohrs 160 wird somit über den Krallring 140 auf den Klemmring 130 übertragen. Aufgrund der unterschiedlichen Winkel zwischen der Auflagefläche zum Kontaktieren der Mantelfläche der Ausnehmung 123 bzw. der Mantelfläche der sich nach hinten erweiternden Ausnehmung 123 und der Achse des Rohrs 160 kann die hinterste Klemmkante der Profilierung 131 sofort in Eingriff mit der Rohraussenseite gelangen und auf diese unmittelbar einen hohen Pressdruck ausüben. Sollte ein weiteres Zurückziehen des Rohrs 160 noch möglich sein, gelangt der Klemmring 130 mit seiner gesamten Aussenmantelfläche in Kontakt mit der Mantelfläche der Ausnehmung 123 und wirkt mit allen vier Klemmkanten auf die Rohraussenfläche. Aufgrund der Konizität der Ausnehmung 123 verkeilt sich der Klemmring 130 in dieser und verhindert somit zuverlässig ein weiteres Zurückziehen. Die Geometrie des Klemmrings 130, der entsprechenden Ausnehmung 123 und des Krallrings 140 ist so gewählt, dass auch bei der durch den hinterschnittenen Abschnitt 123a begrenzten maximalen Verschiebung des Klemmrings 130 der Krallring 140 die Schraubkappe 120 nicht berührt und somit nicht zu einer Beschädigung derselben führen kann.

Das Anschlussstück 111 kann mehrfach verwendet werden, wobei zum Entfernen des von ihm gehaltenen Rohrs 160 die Schraubkappe 120 abgeschraubt werden kann, wodurch die Garantieverbindung zerstört wird. Zur Herstellung einer neuen Verbindung können die Schraubkappe 120 und mit ihr der Klemmring 130 und der Krallring 140 durch neue Teile ersetzt werden. Gegebenenfalls ist auch die Lippendichtung 150 zu ersetzen.

Der in der Figur 1 gezeigte Steckverbinder ist auf Rohre mit einem Aussendurchmesser von 16 mm ausgerichtet. Die Einstecktiefe für das Rohr 160 beträgt 36 mm, die axiale Ausdehnung der hinteren Führungsfläche 117 8 mm, diejenige der vorderen Führungsfläche 122 4 mm. Die mittlere Führungsfläche 115 vergrössert die Gesamtführung um weitere 1.2 mm. Der maximale Verschiebeweg des Krallrings 140 beträgt 4.4 mm (was einer Durchmesserdifferenz des Rohrs von 1.55 mm entspricht), derjenige des Klemmrings 130 4.5 mm. Die Einstecktiefe entspricht beim dargestellten Ausführungsbeispiel genau der Länge der Schraubkappe 120. Der Anwender kann somit vor dem Einschieben mit Hilfe der Schraubkappe 120 eine Markierung auf dem Rohr 160 anbringen und nach erfolgtem Einschieben feststellen, ob das Rohr 160 ganz eingeschoben ist.

Die Figur 2 zeigt ein Schrägbild eines aufgeschnittenen Abschnitts des Grundkörpers und der Schraubkappe zur Darstellung der Garantieverbindung. Die Schraubkappe 120 umfasst in ihrem Mantel, im Bereich des freien Endes einen laschenartigen Abschnitt 124, welcher bogenförmig nach innen gebogen ist, sowie eine dahinter anschliessende durchgehende Ausnehmung 125. Der laschenartige Abschnitt 124 weist aufgrund der Materialelastizität der Schraubkappe 120 eine gewisse elastische Verformbarkeit auf. Beim Aufschrauben der Schraubkappe 120 auf den Grundkörper 112 wird der laschenartige Abschnitt 124 allmählich über einen konischen Abschnitt 119a in der äusseren Mantelfläche des Grundkörpers 112 geschoben, bis er in einer Ausnehmung 119b im Grundkörper 112 von rechteckigem Querschnitt einrastet. Der konische Abschnitt 1 19a des Grundkörpers 112 wird in der durchgehenden Ausnehmung 125 der Schraubkappe 120 aufgenommen.

Die Schraubkappe 120 kann durch Abschrauben grundsätzlich wieder vom Grundkörper 112 gelöst werden. Weil die Ausnehmung 1 19b des Grundkörpers in Löserichtung durch eine steile Wand beschränkt ist, kann der laschenartige Abschnitt 124 die Bewegung der Schraubkappe 120 aber nicht mitmachen, was dazu führt, dass er vom Hauptteil der Schraubkappe 120 abgetrennt wird. Die Abtrennung des laschenartigen Abschnitts 124 ist ein deutlich sichtbares Zeichen dafür, dass die Schraubkappe 120 bereits einmal auf den Grundkörper 112 aufgeschraubt wurde, nimmt also eine Garantiefunktion wahr.

Die Figur 3 zeigt einen Querschnitt einer Lippendichtung für das erfindungsgemässe Anschlussstück. Die Lippendichtung 150 besteht aus EPDM mit einer Shore-Härte von 70. Sie ist im Querschnitt im Wesentlichen V-förmig mit einer inneren Lippe 151, die einen ersten Schenkel der V-Form bildet, und einer äusseren Lippe 156, die den zweiten Schenkel der V-Form bildet. Zwischen den beiden Lippen 151, 156 ist eine offene Stirnseite in der Form einer umlaufenden Ausbuchtung 152 ausgebildet. In der Verlängerung der äusseren Lippe 156 sind drei Rillen 157 ausgebildet, die Verlängerung der inneren Lippe 151 weist eine Stufe 153 auf. Das an die offene Stirnseite der Lippendichtung 150 anschliessende Ende der äusseren Lippe weist acht am Umfang gleichmässig verteilte im Wesentlichen halbkugelförmige Noppen 158 auf. Die der offenen Stirnseite gegenüberliegende hintere Stirnseite 154 ist eben. Die innere Lippe 151 weist einen Winkel von durchschnittlich ca. 110° zur hinteren Stirnseite 154, die äussere Lippe 156 einen Winkel von durchschnittlich ca. 95° zur hinteren Stirnseite 154 auf. Die offene Stirnseite ist in Bezug auf die hintere Stirnseite 154 um ca. 20° nach innen geneigt. Die sich durch die angegebenen Winkel ergebende Keilform der Lippendichtung 150 ermöglicht ein einfaches Einschieben des Rohrs 160 und ist der sich erweiternden Ausnehmung für das Ringdichtungselement angepasst.

Die Neigung der äusseren Lippe 156 und des daran anschliessenden äusseren Abschnitts ist so an die Neigung der die Lippendichtung 150 aufnehmenden Ausnehmung 116 angepasst, dass die hintere Stirnseite bei in den Grundkörper 112 eingesetzter Lippendichtung 150 in Bezug auf den Aufnahmeraum für das Rohr 160 radial verläuft. Die Rillen 157 in der Verlängerung der äusseren Lippe 156 gewährleisten eine sichere Abdichtung zwischen der Aussenfläche der Dichtung und der Ausnehmung 116 im Grundkörper. Die offene Stirnseite zwischen den beiden Lippen 151, 156 ist dem geführten Medium zugewandt. Das Medium drückt also aufgrund seines Drucks die beiden Lippen 151, 156 auseinander und unterstützt somit eine sichere Abdichtung sowohl gegenüber der Ausnehmung 116 als auch gegenüber der Aussenfläche des Rohrs 160.

Im durch die vordere Lippe 151 gebildeten Zwischenraum vor der Stufe 153 lässt sich optional eine gewisse Menge Fett einbringen, z. B. ein Fett, welches auf der Kombination eines organischen Polymers und Dimethyl-Polysiloxan basiert und einer der NLGI-Klassen 1 - 3 angehört. Das Fett dringt aufgrund seiner Fluidität in kleinflächige Unebenheiten der Rohraussenseite ein und schafft somit eine zusätzliche Abdichtung. Die Aufnahme im Zwischenraum verhindert ein Auswaschen des Fetts.

Die Figur 4 zeigt einen Querschnitt eines mehrteiligen Dichtungselements 170 für das erfindungsgemässe Anschlussstück. Dieses ist anstelle des im Zusammenhang mit der Figur 3 dargestellten Dichtungselements 150 ohne weitere Anpassungen im Anschlussstück gemäss den Figuren 1 - 3 einsetzbar.

Das Dichtungselement 170 ist aus einem ersten Dichtungsteil 170a sowie einem zweiten Dichtungsteil 170b zusammengesetzt. Das erste Dichtungsteil 170a besteht aus EPDM mit einer Shore-Härte von 70. Es ist im Querschnitt im Wesentlichen V-förmig mit einer inneren Lippe 171, die einen ersten Schenkel der V-Form bildet, und einer äusseren Lippe 176, die den zweiten Schenkel der V-Form bildet. Zwischen den beiden Lippen 171, 176 ist eine offene Stirnseite in der Form einer umlaufenden Ausbuchtung 172 ausgebildet. In der Verlängerung der äusseren Lippe 176 sind drei Rillen 177 ausgebildet, die Verlängerung der inneren Lippe 171 weist eine Stufe 173 auf. Das an die offene Stirnseite des Dichtungsteils 170a anschliessende Ende der äusseren Lippe weist acht am Umfang gleichmässig verteilte im Wesentlichen halbkugelförmige Noppen 178 auf. Die der offenen Stirnseite gegenüberliegende hintere Stirnseite 174 ist eben. Die innere Lippe 171 weist einen Winkel von durchschnittlich ca. 110° zur hinteren Stirnseite 174, die äussere Lippe 176 einen Winkel von durchschnittlich ca. 95° zur hinteren Stirnseite 174 auf. Die offene Stirnseite ist in Bezug auf die hintere Stirnseite 174 um ca. 20° nach innen geneigt. Die sich durch die angegebenen Winkel ergebende Keilform des Dichtungsteils 170a ermöglicht ein einfaches Einschieben des Rohrs 160 und ist der sich erweiternden Ausnehmung für das Ringdichtungselement angepasst.

In der Innenfläche des ersten Dichtungsteils 170a ist angrenzend an die Stufe 173 eine Ausnehmung mit leichtem Hinterschnitt ausgebildet, in welcher das zweite Dichtungsteil 170b passend aufgenommen ist. Dieses weist einen im Wesentlichen ovalen Querschnitt auf, welcher nach innen, auf die Rohraussenfläche zu leicht zuläuft und an der Innenseite abgeflacht ist. Das zweite Dichtungsteil 170b ist aus EPDM mit einer Shore-Härte von 50 gefertigt, also weicher als das erste Dichtungsteil 170a. Es kann sich somit Unebenheiten der Rohraussenfläche anpassen und eine sichere Abdichtung gewährleisten. Gleichzeitig ist es durch das erste Dichtungsteil 170a sowohl axial als auch radial nach aussen mechanisch gestützt. Die Funktion des Dichtungselements 170 entspricht ansonsten derjenigen der im Zusammenhang mit der Figur 3 eingehend beschriebenen Ringdichtung 150.

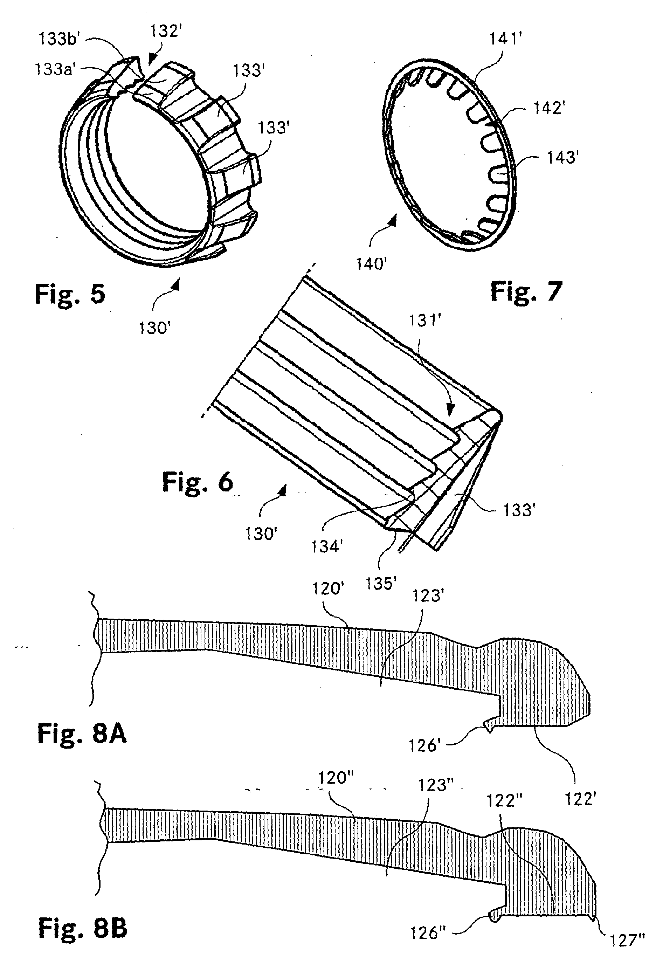

Die Figur 5 zeigt ein Schrägbild eines Klemmrings 130' für ein erfindungsgemässes Anschlussstück, die Figur 6 zeigt einen radialen Querschnitt durch diesen Klemmring. Der Klemmring 130' nimmt dieselben Funktionen wahr wie der im Zusammenhang mit den Figuren 1A, 1B beschriebene Klemmring 130. Er ist wiederum aus glasfaserverstärktem Polyamid (Glasfasergehalt 30%) hergestellt. Der Klemmring 130' weist einen durchgehenden axialen Schlitz 132' auf, so dass er im Durchmesser eine gewisse Variabilität aufweist. Die Aussenmantelfläche des Klemmrings 130' definiert eine erste Auflagefläche zum Kontaktieren der Mantelfläche der sich nach hinten erweiternden Ausnehmung. Sie weist eine Mehrzahl von Stegen 133' auf, welche die Auflagefläche bilden. Die Innenmantelfläche des Klemmrings 130' zur Kontaktierung des Aussenmantels des Rohrs weist wiederum eine Profilierung 131' mit vier in Ebenen senkrecht zur Rohrachse umlaufenden Klemmkanten 134' auf. Die Stege weisen zwei unterschiedlich geneigte Abschnitte 133a', 133b' auf, wobei ein Winkel zwischen dem vorderen Abschnitt 133a' (also demjenigen Abschnitt im Bereich geringeren Querschnitts des Klemmrings 130') und der inneren Auflagefläche für das Rohr 32° und ein Winkel zwischen dem hinteren Abschnitt 133b' (also demjenigen Abschnitt im Bereich grösseren Querschnitts des Klemmerings 130') und der inneren Auflagefläche für das Rohr 27° beträgt. Durch die unterschiedlichen Winkel wird beim Zurückziehen des eingeschobenen Rohrs der Anpressdruck des Klemmrings 130' verstärkt.

An der hinteren Stirnfläche ist angrenzend an die profilierte Innenmantelfläche eine geneigte Anschlagfläche 135' ausgebildet. Sie schliesst mit der inneren Auflagefläche für das Rohr einen Winkel von 120° ein.

Die Figur 7 zeigt ein Schrägbild eines Krallrings 140' für ein erfindungsgemässes Anschlussstück. Der Krallring 140' ist aus Federstahl mit einer Stärke von 0.35 mm gefertigt. Er weist einen äusseren ringförmigen Abschnitt 141' auf sowie einen an diesen Abschnitt 141' anschliessenden inneren Abschnitt 142', der aus einer Mehrzahl von Zähnen 143' gebildet ist. Diese sind im dargestellten unbelasteten Zustand alle ungefähr in einem Winkel von 45° vom äusseren Abschnitt 141' weggeknickt und weisen in eingebautem Zustand somit schräg nach hinten, d. h. von der Mündung des Anschlussstücks 111 weg. Die Zähne 143' sind an ihrem freien Ende abgerundet. Diese Formgebung führt dazu, dass beim Zurückziehen eines in das Anschlussstück eingeschobenen Rohrs eine schnelle initiale Krallwirkung erreicht wird.

Die Figuren 8A, B zeigen Querschnitte durch verschiedene Ausführungsformen von Schraubkappen für ein erfindungsgemässes Anschlussstück. Dargestellt ist jeweils nur das freie Ende mit der ersten Führungsfläche 122' bzw. 122". Ansonsten sind die Kappen gleich ausgebildet wie die im Zusammenhang mit den Figuren 1 und 2 beschriebenen.

Die in der Figur 8A dargestellte Schraubkappe 120' weist am hinteren (d. h. inneren) Ende der Führungsfläche 122' einen innenliegenden Wulst 126' auf, der im Querschnitt ungefähr die Form eines Dreiecks hat und somit eine nach innen gerichtete Arbeitskante bildet. Die Höhe der Kante über der Führungsfläche 122' beträgt ca. 0.10 mm. Beim Einschieben des Rohrs in das Anschlussstück wirkt diese Arbeitskante als Entgratungswerkzeug, entfernt an der Aussenfläche des Rohrs vorhandene Grate und schafft eine gleichmässige und glatte Aussenfläche für das Zusammenwirken mit dem Ringdichtungselement.

Die in der Figur 8B dargestellte Schraubkappe 120" weist am vorderen (d. h. äusseren) Ende der Führungsfläche 122" einen innenliegenden Wulst 127" auf, der im Querschnitt ungefähr die Form eines Dreiecks hat und somit eine nach innen gerichtete Arbeitskante bildet. Die Höhe der Arbeitskante über der Führungsfläche 122" beträgt ca. 0.10 mm. Beim Einschieben des Rohrs in das Anschlussstück wirkt die Arbeitskante als Entgratungswerkzeug, entfernt somit an der Aussenfläche des Rohrs vorhandene Grate. Am hinteren (d. h. inneren) Ende der Führungsfläche 122" weist die Schraubkappe 120" einen innenliegenden Wulst 126" auf, welcher im Querschnitt ungefähr halbrund ausgebildet ist und somit eine nach innen gerichtete Wölbung bildet. Die maximale Höhe der Wölbung beträgt ca. 0.10 mm. Beim Einschieben des Rohrs in das Anschlussstück wirkt diese Wölbung als Rollierwerkzeug zur Schaffung einer gleichmässigen Aussenfläche für das Zusammenwirken mit dem Ringdichtungselement.

Sowohl in der Ausführungsform gemäss Figur 8A als auch in derjenigen gemäss Figur 8B ist bzw. sind die Wülste einstückig mit der Schraubkappe ausgebildet, d. h. aus glasfaserverstärktem und gegen UV-Strahlung stabilisiertem Polyamid (PA). Da dieses Material deutlich härter ist als dasjenige des einzuschiebenden Rohrs (PEx bzw. Polybuten) und in der Regel nur ein Bearbeitungsvorgang stattfindet, reicht dessen Härte für das Entgraten bzw. Rollieren aus. Es ist aber auch denkbar, in anderen Ausführungsformen ein Entgrat- oder Rollierwerkzeug aus einem anderen Material (z. B. aus einem Metall) zu fertigen und dieses an der Schraubkappe zu befestigen, insbesondere einzubetten. Entsprechende Wülste können zudem auch weiter innen, insbesondere an einer Führungsfläche zwischen der Aufnahme für den Klemm- und den Krallring und der Aufnahme für das Ringdichtungselement, ausgebildet sein. Allerdings geht diese Anordnung mit einer etwas höheren Rohreinsteckkraft einher.

Die Erfindung beschränkt sich nicht auf die vorstehend beschriebenen Ausführungsbeispiele. Sie kann in vielerlei Hinsicht anders ausgeführt werden. So kann der Krallring beispielsweise auf andere Art und Weise geführt sein, er kann z. B. einen aussen an den äusseren ringförmigen Abschnitt anschliessenden zylindrischen Abschnitt aufweisen, der in einer entsprechenden axial verlaufenden Ausnehmung im Grundkörper geführt ist. Diese Variante ist insbesondere dann von Vorteil, wenn der innere Abschnitt nur in einem kleinen Winkel vom äusseren Abschnitt weggeknickt ist. Alternativ zum zylindrischen Abschnitt kann der innere Abschnitt in einem kleinen Winkel abgeknickte Zähne zum Eingriff mit der Rohraussenseite und zusätzlich stärker abgeknickte Führungselemente aufweisen, die mit einem entsprechenden Abschnitt des Grundkörpers zusammenwirken. In gewissen Ausführungen kann der Krallring am Klemmring solidarisch befestigt oder ganz weggelassen werden.

Auch der Klemmring und seine Führung können anders ausgebildet sein. So kann, wie vorstehend beschrieben, der Winkel zwischen der ersten Auflagefläche und der zweiten Auflagefläche kleiner sein als der Winkel zwischen der Mantelfläche der sich nach hinten erweiternden Ausnehmung und der Achse des Rohrs. Dies hat zur Folge, dass beim Zurückziehen des Rohrs die hinterste Klemmkante der Profilierung sofort in Eingriff mit der Rohraussenseite gelangt und auf diese unmittelbar einen hohen Pressdruck ausübt. Dies ist insofern von Vorteil als somit ein grösserer Abstand zwischen dem Eingriff des Krallrings und der Kontaktierung durch den Klemmring geschaffen wird. In einer weiteren bevorzugten Variante weist der Klemmring einen vorderen Abschnitt auf, in welchem der Winkel zwischen Klemmringaussenmantel und Rohrachse grösser ist als der Konuswinkel der Aufnahme für den Klemmring sowie einen hinteren Abschnitt, in welchem der Winkel zwischen Klemmringaussenmantel und Rohrachse kleiner ist als der Konuswinkel der Aufnahme. Der knickartige Übergang findet auf der Höhe der vordersten (also mündungsnächsten) Klemmkante statt. Geeignete Winkel sind beispielsweise 14° für den Konuswinkel der Aufnahme, 13.5° für den hinteren Abschnitt sowie 16° für den vorderen Abschnitt.

Bei aneinander angrenzender Anordnung des Krall- und des Klemmrings kann an derjenigen Stirnseite des Klemmrings, welche den Krallring kontaktiert, eine Begrenzungsfläche für den Krallring ausgebildet sein, welche das Zurückbiegen des Krallrings beim Zurückziehen des Rohrs begrenzt. Dadurch wird die maximale Eindringtiefe des Krallrings begrenzt und somit verhindert, dass das Rohr aufgrund der Einwirkung des Krallrings reisst oder eine andere unerwünschte Beschädigung erfährt. Zur Schaffung einer Begrenzungsfläche ist die Stirnseite insbesondere als von aussen nach innen schräg nach hinten verlaufende Fläche ausgebildet, die einen maximalen Biegewinkel des Krallrings begrenzt, sobald der innere Abschnitt des Krallrings auf dieser Fläche aufliegt.

Weiter kann anstelle der dargestellten Lippendichtung eine anders geformte Formdichtung oder - bei geringeren Rohrtoleranzen oder höheren Einschubkräften - auch ein an sich bekannter O-Ring zum Einsatz kommen. Die Dichtung muss nicht in einer vom Grundkörper umschlossenen Ausnehmung aufgenommen sein, sondern kann auch in eine zwischen dem Grundkörper und der Schraubkappe ausgebildete Ausnehmung eingesetzt werden. Der Krallring, der Klemmring und die Formdichtung können auch gemeinsam in einer einzigen Ausnehmung aufgenommen sein. In den letzteren Fällen ist zwischen dem Klemm-/Krallelement und der Dichtung keine weitere Führungsfläche für das Rohr vorhanden, so dass die Führung des Rohrs durch die vordere und die hintere Führungsfläche wahrgenommen wird.

Der Grundkörper des Anschlussstücks bzw. der damit einstückig ausgebildete Grundkörper eines Fittings können aus Metallen (INOX, Rotguss etc.) aber auch aus Kunststoffen (z. B. PPSU) oder aus Verbundwerkstoffen gefertigt werden. Die Kappen und Hülsen können statt aus Kunststoff ebenfalls aus Metall gefertigt werden. Die Aufteilung der Funktionen zwischen Grundkörper und Kappe kann anders gewählt werden als beim dargestellten Ausführungsbeispiel. Für die Kappe kann zudem ein Anschlag an der Aussenseite des Grundkörpers vorgesehen sein, beispielsweise im Bereich der Aufnahme für den Krallring. Um eine zusätzliche Abdichtsicherheit zu gewährleisten, kann das Dichtungselement aus formquellbarem Material gefertigt werden, welches beim Erstkontakt mit Wasser aufquillt.

Zusammenfassend ist festzustellen, dass durch die Erfindung ein für die Etagenverteilung von Trinkwasser geeignetes Anschlussstück geschaffen wird, welches einen Druckabfall vermeidet und kostengünstig ist.

## Patentansprüche

1. Anschlussstück mit einem ersten rohrförmigen Teil (112, 120), welches mit einem zweiten rohrförmigen Teil (160) eines fluidführenden Leitungssystems zur Etagenverteilung von Trinkwasser fluiddicht verbindbar ist, wobei
a) das Anschlussstück (111) derart ausgebildet ist, dass das zweite rohrförmige Teil (160) in verbundenem Zustand teilweise vom ersten rohrförmigen Teil (112, 120) umschlossen ist,
b) im ersten rohrförmigen Teil (112, 120) an einer in verbundenem Zustand das zweite rohrförmige Teil (160) kontaktierenden Innenmantelfläche eine umlaufende Ausnehmung (116) ausgespart ist, in welche ein Ringdichtungselement (150, 170) eingebracht ist,
c) das Anschlussstück (111) derart ausgebildet ist, dass das zweite rohrförmige Teil (160) durch Einschieben in den ersten rohrförmigen Teil (112, 120) in einer Einschubrichtung im Sinn einer Steckverbindung mit dem ersten rohrförmigen Teil (112, 120) verbindbar ist;
**dadurch gekennzeichnet dass**
d) das Anschlussstück (111) derart stütznippellos ausgebildet ist, dass eine Innenmantelfläche des zweiten rohrförmigen Teils (160) in verbundenem Zustand nicht vom Anschlussstück (111) kontaktiert wird; und dass
e) das Anschlussstück (111) im Bereich einer Innenmantelfläche des ersten rohrförmigen Teils eine erste umlaufende Führungsfläche (122) sowie eine in Bezug auf eine Einstecköffnung des Anschlussstücks (111) hinter der ersten Führungsfläche (122) angeordnete zweite umlaufende Führungsfläche (117) für den zweiten rohrförmigen Teil (160) aufweist, wobei die umlaufende Ausnehmung (116) für das Ringdichtungselement (150, 170) zwischen der ersten Führungsfläche (122) und der zweiten Führungsfläche (117) angeordnet ist und wobei eine erste axiale Ausdehnung der ersten Führungsfläche (122) und eine zweite axiale Ausdehnung der zweiten Führungsfläche (117) jeweils mindestens ein Sechstel eines Innendurchmessers des ersten rohrförmigen Teils (112, 120) betragen.

2. Anschlussstück nach Anspruch 1, **dadurch gekennzeichnet, dass** die erste axiale Ausdehnung der ersten Führungsfläche (122) und die zweite axiale Ausdehnung der zweiten Führungsfläche (117) jeweils mindestens ein Viertel des Innendurchmessers des ersten rohrförmigen Teils (112, 120) betragen.

3. Anschlussstück nach Anspruch 1 oder 2, **dadurch gekennzeichnet, dass** zwischen der ersten Führungsfläche (122) und der umlaufenden Ausnehmung (116) ein Klemm- und/oder Krallelement (130, 140) zum axialen Sichern des eingeschobenen zweiten rohrförmigen Teils (160) angeordnet ist.

4. Anschlussstück nach Anspruch 3, **dadurch gekennzeichnet, dass** das Klemm- und/oder Krallelement einen Klemmring (130) mit keilförmigem Querschnitt umfasst, der in einer sich in Bezug auf die Einstecköffnung nach hinten erweiternden Ausnehmung (123) im ersten rohrförmigen Teil (112, 120) aufgenommen ist, sowie einen federnden Krallring (140), der hinter dem Klemmring (130) angeordnet ist.

5. Anschlussstück nach Anspruch 4, **dadurch gekennzeichnet, dass** der Klemmring (130') an einer Aussenmantelfläche im Wesentlichen axial verlaufende Profilierungen (133') zum Zusammenwirken mit der Ausnehmung (123) aufweist.

6. Anschlussstück nach Anspruch 4 oder 5, **dadurch gekennzeichnet, dass** der Klemmring (130') an einer den Krallring (140) kontaktierenden Stirnseite eine geneigte Anschlagfläche aufweist, welche ein Umbiegen von Elementen des Krallrings (140) beim Zurückziehen des eingeschobenen zweiten rohrförmigen Teils (160) begrenzt.

7. Anschlussstück nach einem der Ansprüche 4 bis 6, **dadurch gekennzeichnet, dass** der Krallring (140) einen äusseren kreisringförmigen radialen Abschnitt (141) sowie einen nach innen anschliessenden geschlitzten inneren Abschnitt (142) aufweist, wobei der innere Abschnitt (142) zum äusseren Abschnitt (141) einen Winkel von 0-70° einschliesst.

8. Anschlussstück nach einem der Ansprüche 4 bis 7, **dadurch gekennzeichnet, dass** die sich nach hinten erweiternde Ausnehmung (123) einen Winkel von 1 - 30° zu einer Achse des ersten rohrförmigen Teils (112, 120) aufweist.

9. Anschlussstück nach Anspruch 8, **dadurch gekennzeichnet, dass** der Klemmring (130) eine erste Auflagefläche zum Kontaktieren einer Mantelfläche der sich nach hinten erweiternden Ausnehmung (123) sowie eine zweite Auflagefläche zum Kontaktieren einer Aussenseite des zweiten rohrförmigen Teils (160) aufweist und dass die erste Auflagefläche mindestens einen Abschnitt aufweist, in welchem der Winkel der ersten Auflagefläche zur zweiten Auflagefläche des Klemmrings (130) unterschiedlich ist vom Winkel der sich nach hinten erweiternden Ausnehmung (123) zur Achse des ersten rohrförmigen Teils (112, 120).

10. Anschlussstück nach Anspruch 9, **dadurch gekennzeichnet, dass** eine Differenz zwischen den Winkeln 0.1 - 10° beträgt.

11. Anschlussstück nach einem der Ansprüche 1 bis 10, **dadurch gekennzeichnet, dass** im Bereich der ersten Führungsfläche (122'), und/oder einer weiteren, dem Ringdichtungselement vorgeordneten Führungsfläche (115) ein wulstartiger Vorsprung ausgebildet ist zur Bearbeitung einer Aussenfläche des zweiten rohrförmigen Teils (160) beim Einschieben desselben.

12. Anschlussstück nach einem der Ansprüche 1 bis 11, **dadurch gekennzeichnet, dass** das Ringdichtungselement (150, 170) eine Formdichtung in der Form einer Lippendichtung ist, wobei sich die Ausnehmung (116) für das Ringdichtungselement (150, 170) bevorzugt in Bezug auf die Einstecköffnung nach hinten erweitert und die Lippendichtung (150, 170) einen im Wesentlichen V-förmigen Querschnitt hat und mit ihrer offenen Stirnseite (152) in Einschubrichtung in der Ausnehmung (116) aufgenommen ist.

13. Anschlussstück nach einem der Ansprüche 1 bis 12, **dadurch gekennzeichnet, dass** das Ringdichtungselement (170) ein erstes Ringdichtungsteil (170a) sowie ein zweites Ringdichtungsteil (170b) umfasst, wobei das erste Ringdichtungsteil (170a) aus einem Material hergestellt ist, welches eine grössere Härte aufweist als das Material, aus welchem das zweite Ringdichtungsteil (170b) hergestellt ist und wobei das erste und das zweite Ringdichtungsteil (170a, 170b) bevorzugt derart ausgebildet sind, dass das erste Rohrdichtungsteil (170a) das zweite Rohrdichtungsteil (170b) axial beidseitig stützt.

14. Anschlussstück nach einem der Ansprüche 1 bis 13, **gekennzeichnet durch** ein Kappenteil (120), welches das zweite rohrförmige Teil (160) in verbundenem Zustand teilweise umschliesst.

15. Anschlussstück nach Anspruch 14, **dadurch gekennzeichnet, dass** die erste Führungsfläche (122) im Bereich eines Innenmantels des Kappenteils (120) ausgebildet ist.

16. Anschlussstück nach Anspruch 14 oder 15, **dadurch gekennzeichnet, dass** das Kappenteil (120) lösbar an einem Grundkörper (112) des Anschlussstücks (111) befestigt ist.

17. Anschlussstück nach Anspruch 16, **dadurch gekennzeichnet, dass** zwischen dem Kappenteil (120) und dem Grundkörper (112) ein Garantieelement (119, 124, 125) angeordnet ist, wobei das Garantieelement (119, 124, 125) ein erfolgtes Lösen des Kappenteils vom Grundkörper (112) dauerhaft anzeigt.

18. Anschlussstück nach Anspruch 17, **dadurch gekennzeichnet, dass** auf einem Aussenmantel des Grundkörpers (112) ein Aussengewinde (113) ausgebildet ist, dass auf einem Innenmantel des Kappenteils (120) ein Innengewinde (121) ausgebildet ist, wobei der Kappenteil (120) mit seinem Innengewinde (121) auf das Aussengewinde (113) des Grundkörpers (112) aufschraubbar ist, dass am Aussenmantel des Grundkörpers (112) weiter ein hinterschnittener Bereich (119b) ausgebildet ist, in welchen ein laschenartiger Abschnitt (124) des Kappenteils (120) beim Aufschrauben einrasten kann, wobei der hinterschnittene Bereich (119b) und der laschenartige Abschnitt (124) derart ausgebildet sind, dass bei einem Lösen des aufgeschraubten Kappenteils (120) vom Grundkörper (112) der laschenartige Abschnitt (124) bricht.

19. Anschlussstück nach einem der Ansprüche 1 bis 18, **gekennzeichnet durch** eine Markierung, welche eine vorgegebene Einstecktiefe des zweiten rohrförmigen Teils (160) anzeigt.

20. Verbindungsstück (Fitting) umfassend ein Anschlussstück (111) nach einem der Ansprüche 1 bis 19.

21. Armatur umfassend ein Anschlussstück (111) nach einem der Ansprüche 1 bis 19.

22. Anordnung zur Etagenverteilung von Warm- und Kaltwasser, umfassend ein fluidführendes Leitungssystem mit Rohren aus PEx oder Polybuten umfassend einen zweiten rohrförmigen Teil (160) und mindestens ein Anschlussstück (111) nach einem der Ansprüche 1 bis 19, mit dessen ersten rohrförmigen Teil (112, 120) der zweite rohrförmige Teil (160) fluiddicht verbunden ist, wobei
a) das Anschlussstück (111) derart ausgebildet ist, dass das zweite rohrförmige Teil (160) in verbundenem Zustand teilweise vom ersten rohrförmigen Teil (112, 120) umschlossen ist,
b) im ersten rohrförmigen Teil (112, 120) an einer in verbundenem Zustand das zweite rohrförmige Teil (160) kontaktierenden Innenmantelfläche eine umlaufende Ausnehmung (116) ausgespart ist, in welche ein Ringdichtungselement (150, 170) eingebracht ist,
c) das Anschlussstück (111) derart ausgebildet ist, dass das zweite rohrförmige Teil (160) durch Einschieben in den ersten rohrförmigen Teil (112, 120) in einer Einschubrichtung im Sinn einer Steckverbindung mit dem ersten rohrförmigen Teil (112, 120) verbindbar ist; und
d) das Anschlussstück (111) derart stütznippellos ausgebildet ist, dass eine Innenmantelfläche des zweiten rohrförmigen Teils (160) in verbundenem Zustand nicht vom Anschlussstück (111) kontaktiert wird.

## Claims

1. Connection piece with a first tubular part (112, 120), which can be connected in a fluid-tight manner to a second tubular part (160) of a fluid-carrying system of lines for the distribution of drinking water, wherein
a) the connection piece (111) is formed in such a way that, in the connected state, the second tubular part (160) is partially enclosed by the first tubular part (112, 120),
b) a peripheral recess (116) in which an annular sealing element (150, 170) is received is made in the first tubular part (112, 120), on an inner lateral surface contacting the second tubular part (160) in the connected state,
c) the connection piece (111) is formed in such a way that the second tubular part (160) can be connected to the first tubular part (112, 120) in the sense of a plug-in connection by pushing it into the first tubular part (112, 120) in a pushing-in direction;
**characterized in that**
d) the connection piece (111) is formed without a supporting nipple in such a way that an inner lateral surface of the second tubular part (160) is not contacted by the connection piece (111) in the connected state; and **in that**
e) the connection piece (111) has in the region of an inner lateral surface of the first tubular part a first peripheral guiding surface (122) and a second peripheral guiding surface (117), arranged behind the first guiding surface (122) with respect to an insertion opening of the connection piece (111), for the second tubular part (160), wherein the peripheral recess (116) for the annular sealing element (150, 170) is arranged between the first guiding surface (122) and the second guiding surface (117) and wherein a first axial extent of the first guiding surface (122) and a second axial extent of the second guiding surface (117) respectively make up each at least one sixth of an inside diameter of the first tubular part (112, 120).

2. Connection piece according to Claim 1, **characterized in that** the first axial extent of the first guiding surface (122) and the second axial extent of the second guiding surface (117) respectively make up each at least one fourth of an inside diameter of the first tubular part (112, 120).

3. Connection piece according to Claim 1 or 2, **characterized in that** a clamping and/or pinching element (130, 140) for axially securing the pushed-in second tubular part (160) is arranged between the first guiding surface (122) and the peripheral recess (116).

4. Connection piece according to Claim 3, **characterized in that** the clamping and/or pinching element comprises a clamping ring (130) with a wedge-shaped cross section, which is received in a recess (123) in the first tubular part (112, 120) that widens rearwardly with respect to the insertion opening, as well as a resilient pinching ring (140), which is arranged behind the clamping ring (130).

5. Connection piece according to Claim 4, **characterized in that** the clamping ring (130') has substantially axially running profilings (133') on an outer lateral surface to interact with the recess (123).

6. Connection piece according to Claim 4 or 5, **characterized in that** the clamping ring (130') has on an end face contacting the pinching ring (140) an inclined stop surface, which limits bending back of elements of the pinching ring (140) during the pulling back of the pushed-in second tubular part (160).

7. Connection piece according to one of Claims 4 to 6, **characterized in that** the pinching ring (140) has an outer circular-ring-shaped radial portion (141) and an inwardly adjoining slit inner portion (142), wherein the inner portion (142) includes an angle of 0 - 70° with the outer portion (141).

8. Connection piece according to one of Claims 4 to 7, **characterized in that** the rearwardly widening recess (123) has an angle of 1 - 30° in relation to an axis of the first tubular part (112, 120).

9. Connection piece according to Claim 8, **characterized in that** the clamping ring (130) has a first resting surface for contacting a lateral surface of the rearwardly widening recess (123) as well as a second resting surface for contacting an outer side of the second tubular part (160) and **in that** the first resting surface has at least one portion in which the angle of the first resting surface to the second resting surface of the clamping ring (130) is different from the angle of the rearwardly widening recess (123) to the axis of the first tubular part (112, 120)

10. Connection piece according to Claim 9, **characterized in that** the difference between the angles being 0.1 - 10°.

11. Connection piece according to one of Claims 1 to 10, **characterized in that** in the region of the first guiding surface (122') and/or a further guiding surface (115), arranged ahead of the annual sealing element, there is formed a bead-like projection for working an outer surface of the second tubular part (160) when the latter is pushed in.

12. Connection piece according to one of Claims 1 to 11, **characterized in that** the annular sealing element (150, 170) is a shaped packing in the form of a lip seal, wherein the recess (116) for the annular sealing element (150, 170) preferably widens rearwardly with respect to the insertion opening and the lip seal (150, 170) has a substantially V-shaped cross section and is received with its open end face (152) in the pushing-in direction in the recess (116).

13. Connection piece according to Claim 1, **characterized in that** the annular sealing element (170) comprises a first annular sealing part (170a) and a second annular sealing part (170b), wherein the first annular sealing part (170a) is produced from a material which has a greater hardness than the material from which the second annular sealing part (170b) is produced and wherein the first and second annular sealing parts (170a, 170b) are preferably formed in such a way that the first pipe sealing part (170a) supports the second pipe sealing part (170b) axially on both sides.

14. Connection piece according to one of Claims 1 to 13, **characterized by** a cap part (120), which partially encloses the second tubular part (160) in the connected state.

15. Connection piece according to Claim 14, **characterized in that** the first guiding surface (122) is formed in the region of an inner lateral surface of the cap part (120).

16. Connection piece according to Claim 14 or 15, **characterized in that** the cap part (120) is releasably fastened to a basic body (112) of the connection piece (111).

17. Connection piece according to Claim 16, **characterized in that** arranged between the cap part (120) and the basic body (112) is a tamperproof element (119, 124, 125), in particular with a predetermined breaking point, the tamperproof element (119, 124, 125) permanently indicating when release of the cap part from the basic body (112) has taken place.

18. Connection piece according to Claim 17, **characterized in that** an external thread (113) is formed on an outer lateral surface of the basic body (112), **in that** an internal thread (121) is formed on an inner lateral surface of the cap part (120), wherein the cap part (120) can be screwed with its internal thread (121) onto the external thread (113) of the basic body (112), **in that** also formed on the outer lateral surface of the basic body (112) is an undercut region (119b), in which a tab-like portion (124) of the cap part (120) can engage when the latter is screwed on, the undercut region (119b) and the tab-like portion (124) being formed in such a way that the tab-like portion (124) breaks when the screwed-on cap part (120) is released from the basic body (112).

19. Connection piece according to one of Claims 1 to 18, **characterized by** a marking, which indicates a predetermined insertion depth of the second tubular part (160)

20. Fitting comprising a connection piece (111) according to one of Claims 1 to 19.

21. Faucet comprising a connection piece (111) according to one of Claims 1 to 19.

22. Arrangement for distributing hot and cold water, comprising a fluid-carrying system of lines with pipes of PEx or polybutene comprising a second tubular part (160) and at least one connection piece (111) according to one of Claims 1 to 19, with the first tubular part (112, 120) of which the second tubular part (160) is connected in a fluidtight manner, wherein
a) the connection piece (111) is formed in such a way that, in the connected state, the second tubular part (160) is partially enclosed by the first tubular part (112, 120),
b) a peripheral recess (116) in which an annular sealing element (150, 170) is received is made in the first tubular part (112, 120), on an inner lateral surface contacting the second tubular part (160) in the connected state,
c) the connection piece (111) is formed in such a way that the second tubular part (160) can be connected to the first tubular part (112, 120) in the sense of a plug-in connection by pushing it into the first tubular part (112, 120) in a pushing-in direction; and
d) the connection piece (111) is formed without a supporting nipple in such a way that an inner lateral surface of the second tubular part (160) is not contacted by the connection piece (111) in the connected state.

## Revendications

1. Pièce de raccordement avec une première partie tubulaire (112, 120), qui peut être assemblée de façon étanche au fluide à une deuxième partie tubulaire (160) d'un réseau de conduites de transport de fluide pour la distribution par étages d'eau potable, dans laquelle
a) la pièce de raccordement (111) est conçue de telle manière que la deuxième partie tubulaire (160) soit entourée partiellement, à l'état assemblé, par la première partie tubulaire (112, 120),
b) dans la première partie tubulaire (112, 120), dans une surface latérale intérieure en contact à l'état assemblé avec la deuxième partie tubulaire (160), est pratiqué un évidement périphérique (116), dans lequel un élément de bague d'étanchéité (150, 170) est placé,
c) la pièce de raccordement (111) est conçue de telle manière que la deuxième partie tubulaire (160) puisse être assemblée à la première partie tubulaire (112, 120) par insertion dans la première partie tubulaire (112, 120) dans une direction d'insertion au sens d'un assemblage emboîté,
**caractérisée en ce que**
d) la pièce de raccordement (111) est conçue sans manchon fileté d'appui, de telle manière qu'une face latérale intérieure de la deuxième partie tubulaire (160) ne soit pas en contact avec la pièce de raccordement (111) à l'état assemblé, et **en ce que**
e) la pièce de raccordement (111) présente, dans la région d'une face latérale intérieure de la première partie tubulaire, une première face de guidage périphérique (122) ainsi qu'une deuxième face de guidage périphérique (117) pour la deuxième partie tubulaire (160), disposée derrière la première face de guidage (122) par rapport à une ouverture d'insertion de la pièce de raccordement (111), dans laquelle l'évidement périphérique (116) destiné à l'élément de bague d'étanchéité (150, 170) est disposé entre la première face de guidage (122) et la deuxième face de guidage (117), et dans laquelle une première extension axiale de la première face de guidage (122) et une deuxième extension axiale de la deuxième face de guidage (117) valent respectivement au moins un sixième d'un diamètre intérieur de la première partie tubulaire (112, 120).

2. Pièce de raccordement selon la revendication 1, **caractérisée en ce que** la première extension axiale de la première face de guidage (122) et la deuxième extension axiale de la deuxième face de guidage (117) valent respectivement au moins un quart du diamètre intérieur de la première partie tubulaire (112, 120).

3. Pièce de raccordement selon la revendication 1 ou 2, **caractérisée en ce qu'**un élément de serrage et/ou d'accrochage (130, 140) est disposé entre la première face de guidage (122) et l'évidement périphérique (116) pour la fixation axiale de la deuxième partie tubulaire insérée (160).

4. Pièce de raccordement selon la revendication 3, **caractérisée en ce que** l'élément de serrage et/ou d'accrochage comprend une bague de serrage (130) avec une section transversale en forme de coin, qui est logée dans un évidement (123) formé dans la première partie tubulaire (112, 120) et s'élargissant vers l'arrière par rapport à l'ouverture d'insertion, ainsi qu'une bague d'accrochage élastique (140) qui est disposée derrière la bague de serrage (130).

5. Pièce de raccordement selon la revendication 4, **caractérisée en ce que** la bague de serrage (130') présente sur une face latérale extérieure des profilages (133') s'étendant essentiellement en direction axiale pour coopérer avec l'évidement (123).

6. Pièce de raccordement selon la revendication 4 ou 5, **caractérisée en ce que** la bague de serrage (130') présente, sur un côté frontal en contact avec la bague d'accrochage (140), une face de butée inclinée, qui limite une flexion d'éléments de la bague d'accrochage (140) lors du retrait de la deuxième partie tubulaire insérée (160).

7. Pièce de raccordement selon l'une quelconque des revendications 4 à 6, **caractérisée en ce que** la bague d'accrochage (140) présente une partie radiale annulaire extérieure (141) ainsi qu'une partie intérieure fendue (142) se raccordant vers l'intérieur, dans laquelle la partie intérieure (142) forme avec la partie extérieure (141) un angle de 0 - 70°.

8. Pièce de raccordement selon l'une quelconque des revendications 4 à 7, **caractérisée en ce que** l'évidement (123) s'élargissant vers l'arrière présente un angle de 1 à 30° par rapport à un axe de la première partie tubulaire (112, 120).

9. Pièce de raccordement selon la revendication 8, **caractérisée en ce que** la bague de serrage (130) présente une première face d'appui pour le contact avec une face latérale de l'évidement (123) s'élargissant vers l'arrière ainsi qu'une deuxième face d'appui pour le contact avec un côté extérieur de la deuxième partie tubulaire (160) et **en ce que** la première face d'appui présente au moins une partie, dans laquelle l'angle de la première face d'appui avec la deuxième face d'appui de la bague de serrage (130) est différent de l'angle de l'évidement s'élargissant vers l'arrière (123) avec l'axe de la première partie tubulaire (112, 120).

10. Pièce de raccordement selon la revendication 9, **caractérisée en ce qu'**une différence entre les angles vaut 0,1 à 10°.

11. Pièce de raccordement selon l'une quelconque des revendications 1 à 10, **caractérisée en ce qu'**une saillie en forme de bourrelet est formée dans la région de la première face de guidage (122') et/ou d'une autre face de guidage (115) disposé avant l'élément de bague d'étanchéité pour le façonnage d'une face extérieure de la deuxième partie tubulaire (160) lors de l'insertion de celle-ci.

12. Pièce de raccordement selon l'une quelconque des revendications 1 à 11, **caractérisée en ce que** l'élément de bague d'étanchéité (150, 170) est un joint moulé à la forme d'un joint à lèvre, dans laquelle l'évidement (116) pour l'élément de bague d'étanchéité (150, 170) s'élargit de préférence vers l'arrière par rapport à l'ouverture d'insertion et le joint à lèvre (150, 170) a une section transversale essentiellement en forme de V et est logé avec son côté frontal ouvert (152) dans la direction d'insertion dans l'évidement (116).

13. Pièce de raccordement selon l'une quelconque des revendications 1 à 12, **caractérisée en ce que** l'élément de bague d'étanchéité (170) comprend une première partie de bague d'étanchéité (170a) ainsi qu'une deuxième partie de bague d'étanchéité (170b), dans laquelle la première partie de bague d'étanchéité (170a) est fabriquée en un matériau qui présente une dureté plus élevée que le matériau dont est fabriquée la deuxième partie de bague d'étanchéité (170b), et dans laquelle la première et la deuxième parties de bague d'étanchéité (170a, 170b) sont de préférence conçues de telle manière que la première partie de bague d'étanchéité (170a) soutienne axialement sur les deux côtés la deuxième partie de bague d'étanchéité (170b).

14. Pièce de raccordement selon l'une quelconque des revendications 1 à 13, **caractérisée par** une partie de coiffe (120), qui entoure partiellement à l'état assemblé la deuxième partie tubulaire (160).

15. Pièce de raccordement selon la revendication 14, **caractérisée en ce que** la première face de guidage (122) est formée dans la région d'une surface latérale intérieure de la partie de coiffe (120).

16. Pièce de raccordement selon la revendication 14 ou 15, **caractérisée en ce que** la partie de coiffe (120) est fixée de manière amovible à un corps de base (112) de la pièce de raccordement (111).

17. Pièce de raccordement selon la revendication 16, **caractérisée en ce qu'**un élément de garantie (119, 124, 125) est disposé entre la partie de coiffe (120) et le corps de base (112), dans laquelle l'élément de garantie (119, 124, 125) indique durablement une séparation opérée entre la partie de coiffe et le corps de base (112).

18. Pièce de raccordement selon la revendication 17, **caractérisée en ce qu'**un filet extérieur (113) est formé sur une surface latérale extérieure du corps de base (112), **en ce qu'**un filet intérieur (121) est formé sur une surface latérale intérieure de la partie de coiffe (120), dans laquelle la partie de coiffe (120) peut être vissée avec son filet intérieur (121) sur le filet extérieur (113) du corps de base (112), **en ce qu'**une zone en contre-dépouille (119b) est en outre formée sur la surface latérale extérieure du corps de base (112), dans laquelle une partie en forme de patte (124) de la partie de coiffe (120) peut s'emboîter lors du vissage, dans laquelle la région en contre-dépouille (119b) et la partie en forme de patte (124) sont réalisées de telle manière que, lors d'une séparation de la partie de coiffe (120) vissée et du corps de base (112), la partie en forme de patte (124) se brise.

19. Pièce de raccordement selon l'une quelconque des revendications 1 à 18, **caractérisée par** un marquage, qui indique une profondeur d'insertion prédéterminée de la deuxième partie tubulaire (160).

20. Raccord (fitting) comprenant une pièce de raccordement (111) selon l'une quelconque des revendications 1 à 19.

21. Armature comprenant une pièce de raccordement (111) selon l'une quelconque des revendications 1 à 19.

22. Agencement pour la distribution par étages d'eau chaude et froide, comprenant un réseau de conduites de transport de fluide avec des tubes en polyéthylène réticulé [PEx] ou en polybutène comprenant une deuxième partie tubulaire (160) et au moins une pièce de raccordement (111) selon l'une quelconque des revendications 1 à 19, dont la première partie tubulaire (112, 120) est assemblée de façon étanche au fluide à la deuxième partie tubulaire (160), dans lequel
a) la pièce de raccordement (111) est conçue de telle manière que la deuxième partie tubulaire (160) soit entourée partiellement, à l'état assemblé, par la première partie tubulaire (112, 120),
b) dans la première partie tubulaire (112, 120), dans une surface latérale intérieure en contact à l'état assemblé avec la deuxième partie tubulaire (160), est pratiqué un évidement périphérique (116), dans lequel un élément de bague d'étanchéité (150, 170) est placé,
c) la pièce de raccordement (111) est conçue de telle manière que la deuxième partie tubulaire (160) puisse être assemblée à la première partie tubulaire (112, 120) par insertion dans la première partie tubulaire (112, 120) dans une direction d'insertion au sens d'un assemblage emboîté; et
d) la pièce de raccordement (111) est conçue sans manchon fileté d'appui, de telle manière qu'une face latérale intérieure de la deuxième partie tubulaire (160) ne soit pas en contact avec la pièce de raccordement (111) à l'état assemblé.
